(19) Europäisches Patentamt
European Patent Office
Office européen des brevets

(11) EP 4 596 510 A1

(12) **EUROPEAN PATENT APPLICATION**
published in accordance with Art. 153(4) EPC

(43) Date of publication:
**06.08.2025 Bulletin 2025/32**

(21) Application number: **23872529.5**

(22) Date of filing: **28.09.2023**

(51) International Patent Classification (IPC):
***C03C 27/12*** (2006.01) ***G02F 1/13*** (2006.01)

(52) Cooperative Patent Classification (CPC):
**B32B 17/00; G02F 1/13**

(86) International application number:
**PCT/JP2023/035428**

(87) International publication number:
**WO 2024/071307 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022155509**

(71) Applicant: **SEKISUI CHEMICAL CO., LTD.**
**Osaka-shi**
**Osaka**
**530-8565 (JP)**

(72) Inventors:
- **HAYASHI, Tetsuya**
  **Kouka-shi, Shiga 528-8585 (JP)**
- **NAKAYAMA, Kazuhiko**
  **Mishima-gun, Osaka 618-0021 (JP)**
- **TSUNODA, Ryuta**
  **Kouka-shi, Shiga 528-8585 (JP)**

(74) Representative: **Ter Meer Steinmeister & Partner Patentanwälte mbB**
**Nymphenburger Straße 4**
**80335 München (DE)**

(54) **LIGHT MODULATING BODY, LAMINATED GLASS, AND AUTOMOBILE**

(57) Provided is a light modulating body having high designability. A light modulating body according to the present invention includes a first resin layer, a light modulating layer, and a second resin layer in this order, and the first resin layer and the second resin layer have different colors.

[FIG. 1.]

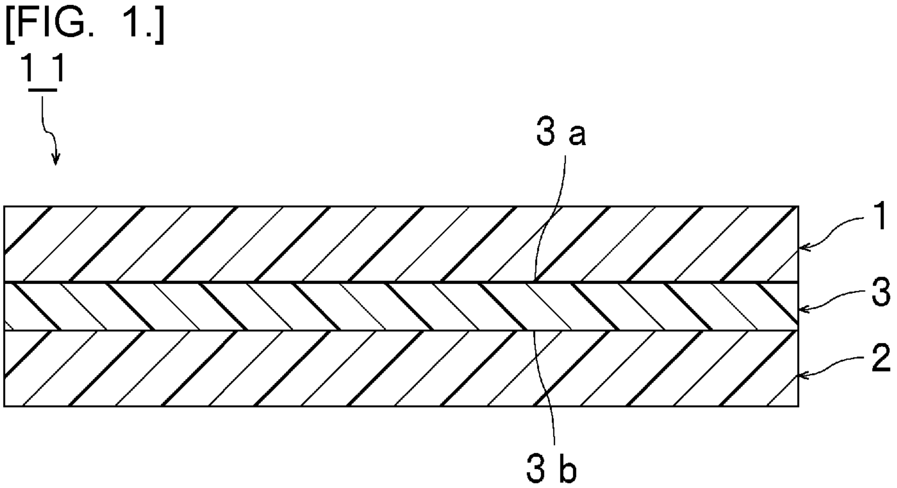


EP 4 596 510 A1

## Description

### TECHNICAL FIELD

The present invention relates to a light modulating body. Also, the present invention relates to a laminated glass and an automobile in which the light modulating body is used.

### BACKGROUND ART

As described in Patent Document 1, a light modulating body including a first resin layer, a light modulating layer, and a second resin layer, in this order, is known. Since the light modulating layer in the light modulating body comes into a transparent state under application of voltage, and comes into an opaque state under no application of voltage, the color of the light modulating body changes under application of voltage and under no application of voltage. The light modulating body is used, for example, as laminated glass (light control glass) by being sandwiched between a pair of glass plates.

### Related Art Document

### Patent Document

Patent Document 1: JP 2013-254079 A

### SUMMARY OF THE INVENTION

### PROBLEMS TO BE SOLVED BY THE INVENTION

In a conventional light modulating body, since the first resin layer and the second resin layer have the same composition, the color of the light modulating body viewed from the first resin layer side and the color of the light modulating body viewed from the second resin layer side are the same under no application of voltage. Therefore, it is hard to say that the conventional light modulating body is high in designability.

It is an object of the present invention to provide a light modulating body having high designability. It is also an object of the present invention to provide a laminated glass and an automobile in which the light modulating body is used.

### MEANS FOR SOLVING THE PROBLEMS

According to a broad aspect of the present invention, there is provided a light modulating body including a first resin layer, a light modulating layer, and a second resin layer in this order, the first resin layer and the second resin layer having different colors.

In a specific aspect of the light modulating body according to the present invention, color difference in L*a*b* color system between visible light transmission color of the first resin layer and visible light transmission color of the second resin layer is more than 0 and less than 100.

In a specific aspect of the light modulating body according to the present invention, an absolute value of value X determined from the following formula (X) is 5 or more and 100 or less.

$$\text{Value X} = A - B \cdots \text{(X)}$$

A: Color difference in L*a*b* color system between visible light transmission color of the first resin layer and visible light transmission color of the light modulating layer under no application of voltage

B: Color difference in L*a*b* color system between visible light transmission color of the second resin layer and visible light transmission color of the light modulating layer under no application of voltage

In a specific aspect of the light modulating body according to the present invention, chromatic value C* in L*a*b* color system of visible light transmission color of the first resin layer is 50 or less, chromatic value C* in L*a*b* color system of visible light transmission color of the second resin layer is 70 or less, and visible light transmittance of the second resin layer is less than 100%.

In a specific aspect of the light modulating body according to the present invention, when a visible light spectrum in wavelengths of 380 nm to 780 nm of the first resin layer is obtained, a visible light dominant wavelength of the first resin layer exists at a wavelength of 580 nm or more and less than 780 nm.

In a specific aspect of the light modulating body according to the present invention, when a visible light spectrum in wavelengths of 380 nm to 780 nm of the second resin layer is obtained, a visible light dominant wavelength of the second

resin layer exists at a wavelength of 380 nm or more and less than 650 nm.

In a specific aspect of the light modulating body according to the present invention, when a visible light spectrum in wavelengths of 380 nm to 780 nm of the first resin layer, and a visible light spectrum in wavelengths of 380 nm to 780 nm of the second resin layer are respectively obtained, a ratio of a peak height of the visible light dominant wavelength of the second resin layer to a peak height of the visible light dominant wavelength of the first resin layer is more than 0 and 5 or less.

In a specific aspect of the light modulating body according to the present invention, the first resin layer contains a thermoplastic resin and a coloring agent, and the second resin layer contains a thermoplastic resin and a coloring agent.

In a specific aspect of the light modulating body according to the present invention, an average thickness of the first resin layer is 50 μm or more and 1000 μm or less, and an average thickness of the second resin layer is 50 μm or more and 1000 μm or less.

In a specific aspect of the light modulating body according to the present invention, color coordinate a* in L*a*b* color system of visible light reflection color of the light modulating body when measured from the first resin layer side under no application of voltage is -20 or more and 20 or less.

In a specific aspect of the light modulating body according to the present invention, color coordinate a* in L*a*b* color system of visible light reflection color of the light modulating body when measured from the second resin layer side under no application of voltage is -20 or more and 20 or less.

In a specific aspect of the light modulating body according to the present invention, color coordinate a* in L*a*b* color system of visible light transmission color of the light modulating body under application of voltage is - 20 or more and 20 or less.

In a specific aspect of the light modulating body according to the present invention, the first resin layer and the second resin layer are a combination having a relation of complementary colors.

In a specific aspect of the light modulating body according to the present invention, a product of color coordinate a* in L*a*b* color system of visible light transmission color of the first resin layer, and color coordinate a* in L*a*b* color system of visible light transmission color of the second resin layer is a negative value.

In a specific aspect of the light modulating body according to the present invention, a sum of color coordinate a* in L*a*b* color system of visible light transmission color of the first resin layer, and color coordinate a* in L*a*b* color system of visible light transmission color of the second resin layer is 15 or less.

In a specific aspect of the light modulating body according to the present invention, a product of color coordinate b* in L*a*b* color system of visible light transmission color of the first resin layer, and color coordinate b* in L*a*b* color system of visible light transmission color of the second resin layer is a negative value.

In a specific aspect of the light modulating body according to the present invention, a sum of color coordinate b* in L*a*b* color system of visible light transmission color of the first resin layer, and color coordinate b* in L*a*b* color system of visible light transmission color of the second resin layer is 15 or less.

In a specific aspect of the light modulating body according to the present invention, a product of color coordinate a* in L*a*b* color system of visible light reflection color of the first resin layer, and color coordinate a* in L*a*b* color system of visible light reflection color of the second resin layer is a negative value.

In a specific aspect of the light modulating body according to the present invention, a sum of color coordinate a* in L*a*b* color system of visible light reflection color of the first resin layer, and color coordinate a* in L*a*b* color system of visible light reflection color of the second resin layer is 10 or less.

In a specific aspect of the light modulating body according to the present invention, a sum of color coordinate b* in L*a*b* color system of visible light reflection color of the first resin layer, and color coordinate b* in L*a*b* color system of visible light reflection color of the second resin layer is 10 or less.

According to a broad aspect of the present invention, there is provided a laminated glass including a first laminated glass member, a second laminated glass member, and the above-described light modulating body, the light modulating body being arranged between the first laminated glass member and the second laminated glass member.

In a specific aspect of the laminated glass according to the present invention, color coordinate a* in L*a*b* color system of visible light reflection color of the laminated glass when measured from the first laminated glass member side under no application of voltage is -20 or more and 20 or less.

In a specific aspect of the laminated glass according to the present invention, color coordinate a* in L*a*b* color system of visible light reflection color of the laminated glass when measured from the second laminated glass member side under no application of voltage is -20 or more and 20 or less.

In a specific aspect of the laminated glass according to the present invention, color coordinate a* in L*a*b* color system of visible light transmission color of the laminated glass under application of voltage is -20 or more and 20 or less.

According to a broad aspect of the present invention, there is provided an automobile including an automobile body, and laminated glass serving as window glass of the automobile, the laminated glass being the above-described laminated glass.

## EFFECT OF THE INVENTION

The light modulating body according to the present invention includes a first resin layer, a light modulating layer, and a second resin layer in this order, and the first resin layer and the second resin layer have different colors. Since the light modulating body according to the present invention has the above-described configuration, the light modulating body has high designability.

## BRIEF DESCRIPTION OF DRAWINGS

[Fig. 1] Fig. 1 is a sectional view schematically showing a light modulating body according to one embodiment of the present invention.
[Fig. 2] Fig. 2 is a sectional view schematically showing an example of laminated glass prepared with the light modulating body shown in Fig. 1.

## MODES FOR CARRYING OUT THE INVENTION

Hereinafter, the details of the present invention will be described.

(Light modulating body)

A light modulating body according to the present invention includes a first resin layer, a light modulating layer, and a second resin layer in this order. In the light modulating body according to the present invention, the first resin layer, the light modulating layer, and the second resin layer are arranged in this order in the thickness direction of the light modulating body. In the light modulating body according to the present invention, the light modulating layer is arranged between the first resin layer and the second resin layer. In the light modulating body according to the present invention, the first resin layer and the second resin layer have different colors.
Since the light modulating body according to the present invention has the above-described configuration, the light modulating body has high designability.
Also, in the light modulating body according to the present invention, by appropriately selecting the first resin layer and the second resin layer to be a combination having a relation of complementary colors, it is possible to realize an achromatic color or a color close to achromatic color under application of voltage although the color viewed from the first resin layer side and the color viewed from the second resin layer side are different from each other under no application of voltage.
When the laminated glass including the light modulating body according to the present invention (light control glass) is used as window glass of an automobile, the color of the window glass differs when viewed from interior side of the automobile and when viewed from exterior side of the automobile under no application of voltage, so that the designability is enhanced. For example, while the color of the window glass viewed from interior side of the automobile can be a color similar to that of the interior of the automobile, or can be an achromatic color or a color close to achromatic color, the color of the window glass viewed from exterior side of the automobile can be a color similar to that of the automobile body, or can be a color having high privacy protection. Also, by appropriately selecting the first resin layer and the second resin layer to be a combination having a relation of complementary colors, it is possible to realize an achromatic color or a color close to achromatic color under application of voltage. Therefore, under application of voltage, it is possible to enhance the visibility from interior side of the automobile and from exterior side of the automobile.
Hereinafter, specific embodiments of the present invention will be described with reference to the drawings.
Fig. 1 is a sectional view schematically showing a light modulating body according to one embodiment of the present invention.
A light modulating body 11 shown in Fig. 1 includes a first resin layer 1, a light modulating layer 3, and a second resin layer 2 in this order. The first resin layer 1 is arranged on a first surface 3a of the light modulating layer 3 and to be layered thereon. The second resin layer 2 is arranged on a second surface 3b of the light modulating layer 3 opposite to the first surface 3a and to be layered thereon. Each of the first resin layer 1 and the second resin layer 2 is a protective layer, and is a surface layer in the present embodiment. The light modulating layer 3 is arranged between the first resin layer 1 and the second resin layer 2 and to be sandwiched therebetween.
In this connection, other layers may be arranged between the first resin layer 1 and the light modulating layer 3, and between the second resin layer 2 and the light modulating layer 3, respectively. It is preferred that the first resin layer 1 and the light modulating layer 3, and the second resin layer 2 and the light modulating layer 3 be directly layered.
In the present invention, it is preferred to measure color coordinate a*, color coordinate b*, color coordinate L* and

chromatic value C* in L*a*b* color system of visible light transmission color for the first resin layer, the light modulating layer, the second resin layer and the light modulating body. Also, in the present invention, it is preferred to measure color coordinate a*, color coordinate b*, color coordinate L* and chromatic value C* in L*a*b* color system of visible light reflection color for the first resin layer, the light modulating layer, the second resin layer and the light modulating body. These color coordinate and chromatic value C* are measured in the following manner.

(1) Preparation of measurement sample (laminated glass for measurement) :
A measuring object (the first resin layer, the light modulating layer, the second resin layer or the light modulating body) is prepared. When the measuring object is the first resin layer, the light modulating layer or the second resin layer, the first resin layer, the light modulating layer and the second resin layer may be delaminated from the light modulating body, to prepare the first resin layer, the light modulating layer, and the second resin layer. The prepared measuring object is sandwiched between two sheets of 2.5-mm-thick clear glass conforming to JIS R3202:1996 to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain a measurement sample (laminated glass for measurement).
(2) Measurement of color coordinate a*, color coordinate b*, color coordinate L* and chromatic value C* of visible light transmission color:
Color coordinate a*, color coordinate b*, color coordinate L* and chromatic value C* in L*a*b* color system of visible light transmission color of the measurement sample (laminated glass for measurement) are measured in accordance with JIS Z8781, using a CIE standard illuminant D65, and 10° field-of-view color matching functions. Specifically, measurement is conducted in the following manner. A spectrum of the measurement sample (laminated glass for measurement) is measured in accordance with JIS R3212:2021, using a spectrophotometer. The obtained color coordinate a*, color coordinate b*, color coordinate L* and chromatic value C* of visible light transmission color of the measurement sample are defined as color coordinate a*, color coordinate b*, color coordinate L* and chromatic value C* of visible light transmission color of the measuring object. In other words, the obtained color coordinate a*, color coordinate b*, color coordinate L* and chromatic value C* of visible light transmission color of the measurement sample are respectively defined as color coordinate a*, color coordinate b*, color coordinate L* and chromatic value C* of visible light transmission color of the first resin layer, the light modulating layer, the second resin layer or the light modulating body which is a measuring object.
(3) Measurement of color coordinate a*, color coordinate b*, color coordinate L* and chromatic value C* of visible light reflection color:
Color coordinate a*, color coordinate b*, color coordinate L* and chromatic value C* in L*a*b* color system of visible light reflection color of the measurement sample (laminated glass for measurement) are measured in accordance with JIS Z8781, using a CIE standard illuminant D65, and 10° field-of-view color matching functions. Specifically, measurement is conducted in the following manner. A spectrum of the measurement sample (laminated glass for measurement) is measured in accordance with JIS R3212:2021, using a spectrophotometer. The obtained color coordinate a*, color coordinate b*, color coordinate L* and chromatic value C* of visible light reflection color of the measurement sample are defined as color coordinate a*, color coordinate b*, color coordinate L* and chromatic value C* of visible light reflection color of the measuring object. In other words, the obtained color coordinate a*, color coordinate b*, color coordinate L* and chromatic value C* of visible light reflection color of the measurement sample are respectively defined as color coordinate a*, color coordinate b*, color coordinate L* and chromatic value C* of visible light reflection color of the first resin layer, the light modulating layer, the second resin layer or the light modulating body which is a measuring object.

Color coordinate a*, color coordinate b*, color coordinate L* and chromatic value C* of visible light transmission color and visible light reflection color of the measurement sample mean values that are measured at a center position between one end and the other end of each measuring object. The one end and the other end are end parts of both sides facing each other in the measuring object. As the spectrophotometer, for example, "UH-4150" available from Hitachi High-Tech Corporation can be used.

<Color coordinate a*, color coordinate b*, color coordinate L* and chromatic value C* of visible light transmission color>

A color coordinate a* in L*a*b* color system of visible light transmission color of the first resin layer is preferably -50 or more, more preferably -40 or more, still more preferably -30 or more, further preferably -20 or more, still further

preferably -10 or more, especially preferably -5 or more, most preferably -2 or more, and is preferably 20 or less, more preferably 10 or less, further preferably 5 or less, especially preferably 3 or less. When the color coordinate a* is the above lower limit or more and the above upper limit or less, it is possible to make the color of the light modulating body good when viewed from the first resin layer side under no application of voltage.

A color coordinate b* in L*a*b* color system of visible light transmission color of the first resin layer is preferably -20 or more, more preferably -10 or more, further preferably **-5** or more, and is preferably 30 or less, more preferably 20 or less, further preferably 10 or less. When the color coordinate b* is the above lower limit or more and the above upper limit or less, it is possible to make the color of the light modulating body good when viewed from the first resin layer side under no application of voltage.

Color coordinate L* in L*a*b* color system of visible light transmission color of the first resin layer is preferably 15 or more, more preferably 20 or more, further preferably 22 or more, and is preferably less than 100, more preferably 90 or less, still more preferably 80 or less, still more preferably 70 or less, still more preferably 60 or less, further preferably 50 or less, still further preferably 40 or less, especially preferably 30 or less, most preferably 25 or less. When the color coordinate L* is the above lower limit or more and the above upper limit or less (or less than the above upper limit), it is possible to make the color of the light modulating body good when viewed from the first resin layer side under no application of voltage.

Chromatic value C* in L*a*b* color system of visible light transmission color of the first resin layer is preferably 0.2 or more, more preferably 0.5 or more, further preferably 1.0 or more, especially preferably 4.0 or more, and is preferably 50 or less, more preferably 40 or less, still more preferably 35 or less, still more preferably 30 or less, further preferably 20 or less, still further preferably 10 or less, especially preferably 6 or less, most preferably 3 or less. When the chromatic value C* is the above lower limit or more and the above upper limit or less, it is possible to make the color of the light modulating body good when viewed from the first resin layer side under no application of voltage.

Color coordinate a* in L*a*b* color system of visible light transmission color of the second resin layer is preferably -30 or more, more preferably -20 or more, further preferably -10 or more, especially preferably -5 or more, most preferably -2 or more, and is preferably 50 or less, more preferably 40 or less, further preferably 30 or less, still further preferably 20 or less, especially preferably 10 or less, most preferably 0 or less. When the color coordinate a* is the above lower limit or more and the above upper limit or less, it is possible to make the color of the light modulating body good when viewed from the second resin layer side under no application of voltage.

Color coordinate b* in L*a*b* color system of visible light transmission color of the second resin layer is preferably -20 or more, more preferably -10 or more, further preferably -5 or more, especially preferably 0 or more, and is preferably 50 or less, more preferably 40 or less, further preferably 30 or less, still further preferably 20 or less, especially preferably 10 or less, most preferably 2 or less. When the color coordinate b* is the above lower limit or more and the above upper limit or less, it is possible to make the color of the light modulating body good when viewed from the second resin layer side under no application of voltage.

Color coordinate L* in L*a*b* color system of visible light transmission color of the second resin layer is preferably 10 or more, more preferably 20 or more, further preferably 30 or more, especially preferably 40 or more, most preferably 50 or more, and is preferably less than 100, more preferably 98 or less, further preferably 96 or less. When the color coordinate L* is the above lower limit or more and the above upper limit or less (or less than the above upper limit), it is possible to make the color of the light modulating body good when viewed from the second resin layer side under no application of voltage.

Chromatic value C* in L*a*b* color system of visible light transmission color of the second resin layer is preferably 0.3 or more, more preferably 0.5 or more, further preferably 2.0 or more, and is preferably 70 or less, more preferably 60 or less, still more preferably 50 or less, further preferably 30 or less, still further preferably 20 or less, especially preferably 15 or less, most preferably 5 or less. When the chromatic value C* is the above lower limit or more and the above upper limit or less, it is possible to make the color of the light modulating body good when viewed from the second resin layer side under no application of voltage.

Color difference in L*a*b* color system between visible light transmission color of the first resin layer and visible light transmission color of the second resin layer is preferably more than 0, more preferably 5 or more, further preferably 10 or more, especially preferably 20 or more, most preferably 30 or more, and is preferably 100 or less, more preferably less than 100, still more preferably 90 or less, still more preferably 80 or less, still more preferably 75 or less, still more preferably 60 or less, still more preferably 50 or less, further preferably 40 or less, still further preferably 30 or less, especially preferably 20 or less, most preferably 15 or less. When the color difference is the above lower limit or more (or more than the above lower limit) and the above upper limit or less (or less than the above upper limit), it is possible to exert the effect of the present invention more effectively.

It is preferred that a product of color coordinate a* in L*a*b* color system of visible light transmission color of the first resin layer, and color coordinate a* in L*a*b* color system of visible light transmission color of the second resin layer be a negative value. In this case, by selecting the first resin layer and the second resin layer to be a combination having a relation of complementary colors, it is possible to realize an achromatic color or a color close to achromatic color under application of voltage.

A sum of a color coordinate a* in L*a*b* color system of visible light transmission color of the first resin layer, and a color coordinate a* in L*a*b* color system of visible light transmission color of the second resin layer is preferably 15 or less, more preferably 10 or less, further preferably 5 or less. When the sum is the above upper limit or less, by selecting the first resin layer and the second resin layer to be a combination having a relation of complementary colors, it is possible to realize an achromatic color or a color close to achromatic color under application of voltage. A sum of a color coordinate a* in L*a*b* color system of visible light transmission color of the first resin layer, and a color coordinate a* in L*a*b* color system of visible light transmission color of the second resin layer may be -15 or more, may be -10 or more, and may be -5 or more.

An absolute value of difference between color coordinate a* in L*a*b* color system of visible light transmission color of the first resin layer, and color coordinate a* in L*a*b* color system of visible light transmission color of the second resin layer is preferably more than 0, more preferably 1 or more, and is preferably 80 or less, more preferably 70 or less, still more preferably 60 or less, still more preferably 50 or less, still more preferably 40 or less, further preferably 30 or less, still further preferably 20 or less, especially preferably 10 or less, most preferably 5 or less. When the absolute value of difference is the above lower limit or more (or more than the above lower limit) and the above upper limit or less, it is possible to exert the effect of the present invention more effectively.

It is preferred that a product of color coordinate b* in L*a*b* color system of visible light transmission color of the first resin layer, and color coordinate b* in L*a*b* color system of visible light transmission color of the second resin layer be a negative value. In this case, by selecting the first resin layer and the second resin layer to be a combination having a relation of complementary colors, it is possible to realize an achromatic color or a color close to achromatic color under application of voltage.

A sum of a color coordinate b* in L*a*b* color system of visible light transmission color of the first resin layer, and a color coordinate b* in L*a*b* color system of visible light transmission color of the second resin layer is preferably 15 or less, more preferably 10 or less, further preferably 5 or less. When the sum is the above upper limit or less, by selecting the first resin layer and the second resin layer to be a combination having a relation of complementary colors, it is possible to realize an achromatic color or a color close to achromatic color under application of voltage. A sum of a color coordinate b* in L*a*b* color system of visible light transmission color of the first resin layer, and a color coordinate b* in L*a*b* color system of visible light transmission color of the second resin layer may be -15 or more, may be -10 or more, and may be -5 or more.

An absolute value of difference between color coordinate b* in L*a*b* color system of visible light transmission color of the first resin layer, and color coordinate b* in L*a*b* color system of visible light transmission color of the second resin layer is preferably more than 0, more preferably 1 or more, and is preferably 30 or less, more preferably 20 or less, further preferably 10 or less, especially preferably 5 or less, most preferably 2 or less. When the absolute value of difference is the above lower limit or more (or more than the above lower limit) and the above upper limit or less, it is possible to exert the effect of the present invention more effectively.

Color coordinate a* in L*a*b* color system of visible light transmission color of the light modulating layer under application of voltage is preferably -30 or more, more preferably -20 or more, further preferably -10 or more, especially preferably -5 or more, and is preferably 30 or less, more preferably 20 or less, further preferably 10 or less, especially preferably 5 or less. When the color coordinate a* is the above lower limit or more and the above upper limit or less, it is possible to make the color of the light modulating body good under application of voltage.

Color coordinate b* in L*a*b* color system of visible light transmission color of the light modulating layer under application of voltage is preferably -30 or more, more preferably -20 or more, further preferably -15 or more, especially preferably -10 or more, most preferably -5 or more, and is preferably 30 or less, more preferably 20 or less, further preferably 10 or less, especially preferably 5 or less, most preferably 2 or less. When the color coordinate b* is the above lower limit or more and the above upper limit or less, it is possible to make the color of the light modulating body good under application of voltage.

Color coordinate L* in L*a*b* color system of visible light transmission color of the light modulating layer under application of voltage is preferably 5 or more, more preferably 8 or more, further preferably 10 or more, and is preferably 80 or less, more preferably 70 or less, still more preferably 60 or less, further preferably 50 or less, still further preferably 40 or less, especially preferably 30 or less, most preferably 25 or less. When the color coordinate L* is the above lower limit or more and the above upper limit or less, it is possible to make the color of the light modulating body good under application of voltage.

It is preferred that an applied voltage for measuring "color coordinate a*, color coordinate b* and color coordinate L* in L*a*b* color system of visible light transmission color of the light modulating layer under application of voltage" be a voltage within the range of 5 V or more and 100 V or less. The applied voltage is, for example, 30 V.

Color coordinate a* in L*a*b* color system of visible light transmission color of the light modulating body under application of voltage is preferably -20 or more, more preferably -15 or more, further preferably -10 or more, especially preferably -5 or more, and is preferably 20 or less, more preferably 15 or less, further preferably 10 or less, especially preferably 5 or less. When the color coordinate a* is the above lower limit or more and the above upper limit or less, it is possible to realize an achromatic color or a color close to achromatic color under application of voltage.

Color coordinate b* in L*a*b* color system of visible light transmission color of the light modulating body under

application of voltage is preferably -15 or more, more preferably -10 or more, further preferably -5 or more, and is preferably 15 or less, more preferably 10 or less, further preferably 5 or less. When the color coordinate b* is the above lower limit or more and the above upper limit or less, it is possible to realize an achromatic color or a color close to achromatic color under application of voltage.

Color coordinate L* in L*a*b* color system of visible light transmission color of the light modulating body under application of voltage is preferably 5 or more, more preferably 8 or more, further preferably 10 or more, and is preferably 80 or less, more preferably 70 or less, further preferably 60 or less. When the color coordinate L* is the above lower limit or more and the above upper limit or less, it is possible to realize an achromatic color or a color close to achromatic color under application of voltage.

Chromatic value C* in L*a*b* color system of visible light transmission color of the light modulating body under application of voltage is preferably more than 0, more preferably 1 or more, and is preferably 25 or less, more preferably 15 or less, further preferably 8 or less, especially preferably 5 or less. When the chromatic value C* is the above lower limit or more (or more than the above lower limit) and the above upper limit or less, it is possible to realize an achromatic color or a color close to achromatic color under application of voltage.

It is preferred that an applied voltage for measuring "color coordinate a*, color coordinate b*, color coordinate L* and chromatic value C* in L*a*b* color system of visible light transmission color of the light modulating body under application of voltage" be a voltage within the range of 5 V or more and 100 V or less. The applied voltage is, for example, 30 V. The same applies to the later-described applied voltage for measuring "visible light transmittance of the light modulating body under application of voltage".

An absolute value of value X determined by the following formula (X) is preferably more than 0, more preferably 5 or more, still more preferably 10 or more, still more preferably 20 or more, further preferably 30 or more, still further preferably 40 or more, especially preferably 50 or more, most preferably 60 or more, and is preferably 100 or less, more preferably less than 100, further preferably 90 or less, especially preferably 80 or less, most preferably 75 or less. When the absolute value is the above lower limit or more (or more than the above lower limit) and the above upper limit or less (or less than the above upper limit), it is possible to make the color of the light modulating body good under no application of voltage.

$$\text{Value } X = A - B \cdots (X)$$

A: Color difference in L*a*b* color system between visible light transmission color of the first resin layer and visible light transmission color of the light modulating layer under no application of voltage

B: Color difference in L*a*b* color system between visible light transmission color of the second resin layer and visible light transmission color of the light modulating layer under no application of voltage

The value Y determined by the following formula (Y) is preferably 20 or less, more preferably 15 or less, further preferably 5 or less. When the value Y is the above lower limit or more and the above upper limit or less, it is possible to realize an achromatic color or a color close to achromatic color under application of voltage. The value Y may be more than 0 and may be 1 or more.

$$\text{Value } Y = [(a_1 + a_2)^2 + (b_1 + b_2)^2]^{1/2} \cdots (Y)$$

$a_1$: Color coordinate a* in L*a*b* color system of visible light transmission color of the first resin layer
$a_2$: Color coordinate a* in L*a*b* color system of visible light transmission color of the second resin layer
$b_1$: Color coordinate b* in L*a*b* color system of visible light transmission color of the first resin layer
$b_2$: Color coordinate b* in L*a*b* color system of visible light transmission color of the second resin layer

<Color coordinate a*, color coordinate b*, color coordinate L* and chromatic value C* of visible light reflection color>

Color coordinate a* in L*a*b* color system of visible light reflection color of the first resin layer is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the light modulating body good when viewed from the first resin layer side under no application of voltage.

Color coordinate b* in L*a*b* color system of visible light reflection color of the first resin layer is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less,

most preferably 3 or less. When the color coordinate b* is the above lower limit or more and the above upper limit or less, it is possible to make the color of the light modulating body good when viewed from the first resin layer side under no application of voltage.

Color coordinate L* in L*a*b* color system of visible light reflection color of the first resin layer is preferably 5 or more, more preferably 10 or more, further preferably 20 or more, and is preferably 70 or less, more preferably 60 or less, further preferably 40 or less, especially preferably 30 or less. When the color coordinate L* is the above lower limit or more and the above upper limit or less, it is possible to make the color of the light modulating body good when viewed from the first resin layer side under no application of voltage.

Chromatic value C* in L*a*b* color system of visible light reflection color of the first resin layer is preferably more than 0, more preferably more than 0.5, and is preferably 20 or less, more preferably 15 or less, further preferably 10 or less, especially preferably 5 or less, most preferably 3 or less. When the chromatic value C* is more than the above lower limit and the above upper limit or less, it is possible to make the color of the light modulating body good when viewed from the first resin layer side under no application of voltage.

Color coordinate a* in L*a*b* color system of visible light reflection color of the second resin layer is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the light modulating body good when viewed from the second resin layer side under no application of voltage.

Color coordinate b* in L*a*b* color system of visible light reflection color of the second resin layer is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate b* is the above lower limit or more and the above upper limit or less, it is possible to make the color of the light modulating body good when viewed from the second resin layer side under no application of voltage.

Color coordinate L* in L*a*b* color system of visible light reflection color of the second resin layer is preferably 5 or more, more preferably 10 or more, further preferably 20 or more, and is preferably 70 or less, more preferably 60 or less, further preferably 50 or less, especially preferably 40 or less, most preferably 35 or less. When the color coordinate L* is the above lower limit or more and the above upper limit or less, it is possible to make the color of the light modulating body good when viewed from the second resin layer side under no application of voltage.

Chromatic value C* in L*a*b* color system of visible light reflection color of the second resin layer is preferably more than 0, more preferably 0.5 or more, and is preferably 20 or less, more preferably 15 or less, further preferably 10 or less, especially preferably 5 or less, most preferably 3 or less. When the chromatic value C* is the above lower limit or more (or more than the above lower limit) and the above upper limit or less, it is possible to make the color of the light modulating body good when viewed from the second resin layer side under no application of voltage.

Color difference in L*a*b* color system between visible light reflection color of the first resin layer and visible light reflection color of the second resin layer is preferably more than 0, more preferably 5 or more, and is preferably 50 or less, more preferably 40 or less, still more preferably 30 or less, further preferably 20 or less, especially preferably 15 or less, most preferably 10 or less. When the color difference is the above lower limit or more (or more than the above lower limit) and the above upper limit or less, it is possible to further enhance the designability.

It is preferred that a product of color coordinate a* in L*a*b* color system of visible light reflection color of the first resin layer, and color coordinate a* in L*a*b* color system of visible light reflection color of the second resin layer be a negative value. In this case, it becomes easy to select the first resin layer and the second resin layer to be a combination having a relation of complementary colors, and it is possible to realize an achromatic color or a color close to achromatic color under application of voltage.

A sum of a color coordinate a* in L*a*b* color system of visible light reflection color of the first resin layer, and a color coordinate a* in L*a*b* color system of visible light reflection color of the second resin layer is preferably 10 or less, more preferably 5 or less, further preferably 2 or less. When the sum is the above upper limit or less, by selecting the first resin layer and the second resin layer to be a combination having a relation of complementary colors, it is possible to realize an achromatic color or a color close to achromatic color under application of voltage. A sum of a color coordinate a* in L*a*b* color system of visible light reflection color of the first resin layer, and a color coordinate a* in L*a*b* color system of visible light reflection color of the second resin layer may be -10 or more, may be -5 or more, and may be -2 or more.

An absolute value of difference between color coordinate a* in L*a*b* color system of visible light reflection color of the first resin layer, and color coordinate a* in L*a*b* color system of visible light reflection color of the second resin layer is preferably more than 0, preferably 1 or more, and is preferably 40 or less, more preferably 30 or less, still more preferably 20 or less, further preferably 15 or less, especially preferably 10 or less, most preferably 5 or less. When the absolute value of difference is the above lower limit or more (or more than the above lower limit) and the above upper limit or less, it is possible to exert the effect of the present invention more effectively.

A sum of a color coordinate b* in L*a*b* color system of visible light reflection color of the first resin layer, and a color coordinate b* in L*a*b* color system of visible light reflection color of the second resin layer is preferably 10 or less, more preferably 5 or less, further preferably 2 or less. When the sum is the above upper limit or less, by selecting the first resin layer and the second resin layer to be a combination having a relation of complementary colors, it is possible to realize an achromatic color or a color close to achromatic color under application of voltage. A sum of a color coordinate b* in L*a*b* color system of visible light reflection color of the first resin layer, and a color coordinate b* in L*a*b* color system of visible light reflection color of the second resin layer may be -10 or more, may be -5 or more, and may be -2 or more.

An absolute value of difference between color coordinate b* in L*a*b* color system of visible light reflection color of the first resin layer, and color coordinate b* in L*a*b* color system of visible light reflection color of the second resin layer is preferably more than 0, preferably 1 or more, and is preferably 30 or less, more preferably 20 or less, further preferably 10 or less, especially preferably 5 or less, most preferably 3 or less. When the absolute value of difference is the above lower limit or more (or more than the above lower limit) and the above upper limit or less, it is possible to exert the effect of the present invention more effectively.

Under no application of voltage, color coordinate a* in L*a*b* color system of visible light reflection color of the light modulating body when measured from the first resin layer side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the light modulating body good when viewed from the first resin layer side under no application of voltage.

Under no application of voltage, color coordinate b* in L*a*b* color system of visible light reflection color of the light modulating body when measured from the first resin layer side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate b* is the above lower limit or more and the above upper limit or less, it is possible to make the color of the light modulating body good when viewed from the first resin layer side under no application of voltage.

Under no application of voltage, color coordinate L* in L*a*b* color system of visible light reflection color of the light modulating body when measured from the first resin layer side is preferably 5 or more, more preferably 10 or more, further preferably 20 or more, and is preferably 60 or less, more preferably 50 or less, further preferably 40 or less, especially preferably 30 or less. When the color coordinate L* is the above lower limit or more and the above upper limit or less, it is possible to make the color of the light modulating body good when viewed from the first resin layer side under no application of voltage.

Under no application of voltage, chromatic value C* in L*a*b* color system of visible light reflection color of the light modulating body when measured from the first resin layer side is preferably more than 0, more preferably 0.2 or more, and is preferably 30 or less, more preferably 20 or less, further preferably 10 or less, especially preferably 5 or less, most preferably 3 or less. When the chromatic value C* is the above lower limit or more (or more than the above lower limit) and the above upper limit or less, it is possible to make the color of the light modulating body good when viewed from the first resin layer side under no application of voltage.

Under no application of voltage, color coordinate a* in L*a*b* color system of visible light reflection color of the light modulating body when measured from the second resin layer side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the light modulating body good when viewed from the second resin layer side under no application of voltage.

Under no application of voltage, color coordinate b* in L*a*b* color system of visible light reflection color of the light modulating body when measured from the second resin layer side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate b* is the above lower limit or more and the above upper limit or less, it is possible to make the color of the light modulating body good when viewed from the second resin layer side under no application of voltage.

Under no application of voltage, color coordinate L* in L*a*b* color system of visible light reflection color of the light modulating body when measured from the second resin layer side is preferably 5 or more, more preferably 10 or more, further preferably 20 or more, especially preferably 30 or more, most preferably 35 or more, and is preferably 60 or less, more preferably 50 or less, further preferably 40 or less. When the color coordinate L* is the above lower limit or more and the above upper limit or less, it is possible to make the color of the light modulating body good when viewed from the second resin layer side under no application of voltage.

Under no application of voltage, chromatic value C* in L*a*b* color system of visible light reflection color of the light modulating body when measured from the second resin layer side is preferably more than 0, more preferably 0.5 or more, and is preferably 30 or less, more preferably 20 or less, further preferably 10 or less, especially preferably 5 or less.

When the chromatic value C* is the above lower limit or more (or more than the above lower limit) and the above upper limit or less, it is possible to make the color of the light modulating body good when viewed from the second resin layer side under no application of voltage.

Color difference in L*a*b* color system between visible light reflection color of the light modulating body when measured from the first resin layer side under no application of voltage and visible light reflection color of the light modulating body when measured from the second resin layer side under no application of voltage is preferably 0.5 or more, more preferably 5 or more, further preferably 10 or more, and is preferably 50 or less, more preferably 40 or less, further preferably 30 or less, especially preferably 20 or less. When the color difference is the above lower limit or more and the above upper limit or less, the color difference when viewed from the first resin layer side and when viewed from the second resin layer side under no application of voltage is large, so that it is possible to enhance the designability of the light modulating body.

<Visible light transmittance and visible light spectrum>

Visible light transmittance of the first resin layer is preferably more than 0%, more preferably 2% or more, further preferably 4% or more, and is preferably less than 100%, preferably 95% or less, more preferably 85% or less, still more preferably 75% or less, still more preferably 65% or less, still more preferably 55% or less, further preferably 45% or less, still further preferably 35% or less, especially preferably 25% or less, most preferably 15% or less.

Visible light transmittance of the second resin layer is preferably more than 0%, more preferably 10% or more, still more preferably 20% or more, still more preferably 25% or more, still more preferably 35% or more, further preferably 45% or more, still further preferably 55% or more, especially preferably 65% or more, most preferably 75% or more, and is preferably less than 100%, more preferably 95% or less, further preferably 90% or less.

It is preferred that visible light transmittance of the first resin layer and visible light transmittance of the second resin layer be different from each other.

Visible light transmittance of the light modulating body under application of voltage is preferably 0.2% or more, more preferably 0.5% or more, further preferably 1% or more, especially preferably 3% or more, and is preferably 60% or less, more preferably 50% or less, still more preferably 40% or less, further preferably 30% or less, still further preferably 20% or less, especially preferably 10% or less, most preferably 5% or less.

When a visible light spectrum in wavelengths of 380 nm to 780 nm of the first resin layer is obtained, a visible light dominant wavelength of the first resin layer exists preferably at a wavelength of 550 nm or more and 780 nm or less, more preferably at a wavelength of 580 nm or more and less than 780 nm.

When a visible light spectrum in wavelengths of 380 nm to 780 nm of the second resin layer is obtained, a visible light dominant wavelength of the second resin layer exists preferably at a wavelength of 380 nm or more and less than 650 nm, more preferably at a wavelength of 380 nm or more and 580 nm or less, further preferably at a wavelength of 380 nm or more and less than 580 nm, especially preferably at a wavelength of 380 nm or more and less than 550 nm.

When a visible light spectrum in wavelengths of 380 nm to 780 nm of the first resin layer, and a visible light spectrum in wavelengths of 380 nm to 780 nm of the second resin layer are respectively obtained, a ratio of a peak height of the visible light dominant wavelength of the second resin layer to a peak height of the visible light dominant wavelength of the first resin layer is defined as a ratio (A). The ratio (A) is preferably more than 0, preferably 5 or less, more preferably 4 or less, still more preferably 3 or less, further preferably 2 or less, especially preferably 1 or less, most preferably 0.5 or less. When the ratio (A) is more than the above lower limit and the above upper limit or less, it becomes easy to select the first resin layer and the second resin layer to be a combination having a relation of complementary colors, and it is possible to realize an achromatic color or a color close to achromatic color under application of voltage.

The visible light transmittance and the visible light spectrum can be measured in the following manner.

A measuring object (the first resin layer, the second resin layer or the light modulating body) is prepared. When the measuring object is the first resin layer or the second resin layer, the first resin layer and the second resin layer may be delaminated from the light modulating body, to prepare the first resin layer and the second resin layer. The prepared measuring object is sandwiched between two sheets of 2.5-mm-thick clear glass conforming to JIS R3202:1996 to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain a measurement sample (laminated glass for measurement).

The visible light transmittance and the visible light spectrum of the measurement sample (laminated glass for measurement) are respectively, defined as visible light transmittance and visible light spectrum of the measuring object. In other words, visible light transmittance and the visible light spectrum of the measurement sample are respectively defined as visible light transmittance and visible light spectrum of the first resin layer, the second resin layer or the light modulating body which is a measuring object.

Visible light transmittance of the measurement sample can be measured using a spectrophotometer (for example, "U-4150" available from Hitachi High-Tech Corporation) in accordance with JIS R3212:2021 in wavelengths of 380 nm to 780 nm with A light source defined by JIS Z8701. It is preferred that the visible light transmittance be measured at the center position in plan view of the measuring object.

The visible light dominant wavelength means the wavelength having the lowest transmittance among absorption wavelengths coming from the coloring agent in the visible light spectrum.

Hereinafter, members used in the light modulating body according to the present invention are further described.

(Light modulating layer)

The light modulating layer is a layer having light modulating property. The light modulating property means the property that the optical characteristics change by energy impartment. Examples of the energy include light energy, electric energy, and thermal energy, and the like. It is preferred that the light modulating layer be a layer in which visible light transmittance changes depending on presence or absence of application of voltage, and is capable of adjusting the incident light intensity. The material of the light modulating layer is not particularly limited, and may be any material as long as the material has light modulating property.

Examples of the method of the light modulating layer include a PDLC (Polymer Dispersed Liquid Crystal) method, an SPD (Suspended Particle Device) method, and an electrochromic method, and the like. From the viewpoint of further enhancing the light modulating performance, it is preferred that the light modulating layer be a light modulating layer of the PDLC method, the SPD method or the electrochromic method. The light modulating layer may be a light modulating layer of the PDLC method or the SPD method. The light modulating layer may be a light modulating layer of the electrochromic method. The light modulating layer may be a light modulating layer of the PDLC method. The light modulating layer may be a light modulating layer of the SPD method. Also, the light modulating layer may be a TN type or STN type. The light modulating body and the laminated glass need not include a liquid crystal display. The light modulating body and the laminated glass need not include a light modulating layer in a liquid crystal display. The light modulating body need not be a liquid crystal device, and may be a light modulating body other than liquid crystal display devices.

<PDLC method>

It is preferred that the light modulating layer according to the PDLC method contain a binder, and a liquid crystal material dispersed in the binder. In the light modulating layer according to the PDLC method, the liquid crystal material may be encapsulated in micro capsules. In other words, the method of the light modulating layer according to the PDLC method may be a microcapsule type liquid crystal method (PDMLC).

It is preferred that the liquid crystal material have the property that the orientation changes by application of voltage. The liquid crystal material may be dispersed as a continuous phase in the binder, or may be dispersed in the form of liquid crystal drops or in the form of liquid crystal capsules in the binder. Examples of the liquid crystal materials include nematic liquid crystal and cholesteric liquid crystal, and the like.

Examples of the material of the cholesteric liquid crystal include steroid-based cholesterol derivatives, Schiff base-based, azo-based, azoxy-based, benzoate-based, biphenyl-based, terphenyl-based, cyclohexyl carbonate-based, phenylcyclohexane-based, biphenylcyclohexane-based, pyrimidine-based, dioxane-based, cyclohexyl cyclohexanoate-based, cyclohexylethane-based, cyclohexane-based, tolan-based, alkenyl-based, stilbene-based, condensed polycyclic and the like nematic liquid crystal and smectic liquid crystal, and materials in which a chiral ingredient composed of a Schiff base-based, azo-based, ester-based, biphenyl-based and the like optically active material is added to these mixed liquid crystal, and the like. One kind of the material of the cholesteric liquid crystal may be used alone, and two or more kinds thereof may be used in combination.

The binder retains the liquid crystal material, and suppresses flow of the liquid crystal material. It is preferred that the binder do not dissolve in a liquid crystal material, have the intensity tolerable to external force, and have high transmissivity for reflection light and incident light. Examples of the material of the binder include water-soluble polymer materials such as gelatin, polyvinyl alcohol, polyvinyl acetal resin, cellulose derivatives, polyacrylic acid-based polymers, ethyleneimine, polyethylene oxide, polyacrylamide, polystyrene sulfonate, polyamidine, and isoprene-based sulfonic acid polymer, and materials that can be made into an aqueous emulsion, such as fluorine resin, silicone resin, acrylic resin, urethane resin, and epoxy resin, and the like. Only one kind of the material of the binder may be used, and two or more kinds thereof may be used in combination.

It is preferred that the binder be cross-lined by a cross-linker. The cross-linker is not particularly limited as long as cross-linkage is formed between the binders and thus the binder is made into a hard film, or made hardly soluble, or insoluble. Examples of the cross-linker include acetaldehyde, glutaraldehyde, glyoxal, potassium alum hydrate of multivalent metal salt compound, adipic acid dihydrazide, melamine formalin oligomer, ethylene glycol diglycidyl ether, polyamide epichlorohydrin, and polycarbodiimide, and the like. One kind of the cross-linker may be used alone, and two or

more kinds thereof may be used in combination.

<SPD method>

It is preferred that the light modulating layer according to the SPD method contain a resin matrix, and a light modulating suspension dispersed in the resin matrix.

The light modulating suspension contains a dispersion medium, and light modulating particles dispersed in the dispersion medium.

Examples of the light modulating particles include polyiodide, carbon-based materials such as carbon black, metal materials such as copper, nickel, iron, cobalt, chromium, titanium, and aluminum, and inorganic compound materials such as silicone nitride, titanium nitride, and aluminum oxide, and the like. Also, the light modulating particles may be particles in which these materials are coated with a polymer. One kind of the light modulating particles may be used alone, and two or more kinds thereof may be used in combination.

The dispersion medium disperses the light modulating particles in such a condition that the particles can flow. It is preferred that the dispersion medium be a material that selectively adheres to the light modulating particles, coats the light modulating particles, acts in such a manner that the light modulating particles flow to a phase-separated liquid drop phase at the time of phase separation from the resin matrix, lacks electric conductivity, and lacks affinity with the resin matrix. Furthermore, it is preferred that the dispersion medium be a liquid copolymer having approximate refractive index with the resin matrix in the light modulating laminate prepared therefrom. The liquid copolymer is preferably (meth)acrylic acid ester oligomer having a fluoro group or a hydroxyl group, and more preferably a (meth)acrylic acid ester oligomer having a fluoro group and a hydroxyl group. By using such a copolymer, monomer units of a fluoro group or a hydroxyl group face the light modulating particles, and the remaining monomer units stabilize liquid drops of the light modulating suspension in the resin matrix. Therefore, the light modulating particles are easy to be dispersed in the light modulating suspension, and at the time of phase separation from the resin matrix, the light modulating particles are easy to be guided into the liquid drops to be phase separated.

Examples of the (meth)acrylic acid ester oligomer having a fluoro group or a hydroxyl group include 2,2,2-trifluoroethyl methacrylate/butyl acrylate/2-hydroxyethyl acrylate copolymer, 3,5,5-trimethylhexyl acrylate/2-hydroxypropyl acrylate/fumaric acid copolymer, butyl acrylate/2-hydroxyethyl acrylate copolymer, 2,2,3,3-tetrafluoropropyl acrylate/butyl acrylate/2-hydroxyethyl acrylate copolymer, 1H,1H, 5H-octafluoropentyl acrylate/butyl acrylate/2-hydroxyethyl acrylate copolymer, 1H,1H,2H,2H-heptadecafluorodecyl acrylate/butyl acrylate/2-hydroxyethyl acrylate copolymer, 2,2,2-trifluoroethyl methacrylate/butyl acrylate/2-hydroxyethyl acrylate copolymer, 2,2,3,3-tetrafluoropropyl methacrylate/butyl acrylate/2-hydroxyethyl acrylate copolymer, 1H,1H,5H-octafluoropentyl methacrylate/butyl acrylate/2-hydroxyethyl acrylate copolymer, and 1H,1H,2H,2H-heptadecafluorodecyl methacrylate/butyl acrylate/2-hydroxyethyl acrylate copolymer, and the like. Also, it is more preferred that these (meth)acrylic acid ester oligomers have both a fluoro group and a hydroxyl group.

A weight average molecular weight of the (meth)acrylic acid ester oligomer is preferably 1000 or more, more preferably 2000 or more, and is preferably 20000 or less, more preferably 10000 or less.

The light modulating layer can be prepared by using a resin material for forming the resin matrix, and the light modulating suspension.

It is preferred that the resin material be a resin material that cures by irradiation with energy rays. Examples of the resin material that cures by irradiation with energy rays include a polymer composition containing a photopolymerization initiator, and a polymer compound that cures by energy rays such as ultraviolet rays, visible light rays or electron rays. Examples of the polymer composition include polymer compositions containing a polymerizable monomer having an ethylenic unsaturated group and a photo polymerization initiator. Examples of the polymerizable monomer having an ethylenic unsaturated group include a non-cross-linkable monomer and a cross-linkable monomer.

Examples of the non-cross-linkable monomer include: as vinyl compounds, styrene monomers such as styrene, $\alpha$-methylstyrene, and chlorostyrene; vinyl compounds such as methylvinyl ether, ethylvinyl ether, and propyl vinyl ether; acid vinyl ester compounds such as vinyl acetate, vinyl butyrate, vinyl laurate, and vinyl stearate; halogen-containing monomers such as vinyl chloride, and vinyl fluoride; as (meth)acrylic compounds, alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth) acrylate; oxygen atom-containing (meth)acrylate compounds such as 2-hydroxyethyl(meth)acrylate, glycerol (meth) acrylate, polyoxyethylene (meth)acrylate, and glycidyl (meth)acrylate; nitrile-containing monomers such as (meth) acrylonitrile; halogen-containing (meth)acrylate compounds such as trifluoromethyl (meth)acrylate, and pentafluoroethyl (meth)acrylate; as $\alpha$-olefin compounds, olefin compounds such as diisobutylene, isobutylene, Linealene, ethylene, and propylene; as conjugated diene compounds, isoprene, butadiene, and the like.

Examples of the cross-linkable monomers include: as vinyl compounds, vinyl monomers such as divinylbenzene, 1,4-divinyloxybutane, and divinylsulfone; as (meth)acrylic compounds, multifunctional (meth)acrylate compounds

such as tetramethylolmethane tetra(meth)acrylate, polytetramethyleneglycol diacrylate, tetramethylolmethane tri(meth) acrylate, tetramethylolmethane di(meth)acrylate, trimethylolpropane tri(meth)acrylate, dipentaerythritol hexa (meth) acrylate, dipentaerythritol penta (meth) acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di (meth)acrylate; as allyl compounds, triallyl (iso)cyanurate, triallyl trimellitate, diallyl phthalate, diallyl acrylamide, diallyl ether; as silane compounds, silane alkoxide compounds such as tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, dimethyldiethoxysilane, diisopropyldimethoxysilane, trimethoxysilylstyrene, γ-(meth)acryloxypropyl trimethoxysilane, 1,3-divinyltetramethyldisiloxane, methylphenyldimethoxysilane, and diphenyldimethoxysilane; polymerizable double bond-containing silane alkoxides such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane; cyclic siloxanes such as decamethylcyclopentanesiloxane; modified (reactive) silicone oils such as one terminal-modified silicone oil, both terminal silicone oil, and side-chain type silicone oil; carboxyl group-containing monomers such as (meth) acrylic acid, maleic acid, and maleic anhydride, and the like.

Examples of the photo polymerization initiator include 2,2-dimethoxy-1,2-diphenylethane-1-one, 1-(4-(2-hydroxyethoxy)phenyl)-2-hydroxy-2-methyl-1-propan-1-one, bis(2,4,6-trimethylbenzoyl)phenylphosphine oxide, 2-hydroxy-2-methyl-1-phenylpropan-1-one, and (1-hydroxycyclohexyl)phenylketone, and the like.

The resin material may contain an organic solvent-soluble resin, a thermoplastic resin, and poly(meth)acrylic acid, and the like. Also, the resin material may contain various additives such as an anti-coloring agent, an oxidation inhibitor, and an adhesion promotor, and may contain a solvent.

<Electrochromic method>

It is preferred that the light modulating layer according to the electrochromic method contain an electrochromic substance.

Examples of the electrochromic substance include inorganic compounds having electrochromicity, organic compounds having electrochromicity, and mixed valence complexes having electrochromicity, and the like. Examples of the inorganic compounds having electrochromicity include tungsten oxide, molybdenum oxide, iridium oxide, nickel oxide, vanadium pentoxide, and titanium oxide, and the like. Examples of the organic compounds having electrochromicity include a polypyrrole compound, a polythiophene compound, a polyparaphenylenevinylene compound, a polyaniline compound, a polyacetylene compound, a polyethylenedioxythiophene compound, a metal phthalocyanine compound, a viologen compound, a viologen salt compound, a ferrocene compound, a dimethyl terephthalate compound, and a diethyl terephthalate compound, and the like. Examples of the mixed valence complexes having electrochromicity include a Prussian blue-type complex ($KFe[Fe(CN)_6]$ etc.). One kind of the electrochromic substance may be used alone, and two or more kinds thereof may be used in combination.

<Other details of light modulating layer>

An average thickness of the light modulating layer is preferably 0.1 μm or more, more preferably 0.3 μm or more, and is preferably 1.0 μm or less, more preferably 0.6 μm or less. When the average thickness of the light modulating layer is the above lower limit or more and the above upper limit or less, the light modulating effect by the light modulating layer becomes clear.

(First resin layer and second resin layer)

In the light modulating body, the first resin layer and the second resin layer have different colors. "The first resin layer and the second resin layer have different colors" means satisfying the following configuration (A) or the configuration (B). Both of the configuration (A) and the configuration (B) may be satisfied.

Configuration (A): Color difference in L*a*b* color system between visible light transmission color of the first resin layer and visible light transmission color of the second resin layer is more than 0.

Configuration (B): Color difference in L*a*b* color system between visible light reflection color of the first resin layer and visible light reflection color of the second resin layer is more than 0.

In order to make the colors of the first resin layer and the second resin layer different from each other, it is preferred that the first resin layer and the second resin layer have different compositions.

<Resin>

The first resin layer contains a resin. It is preferred that the first resin layer contain a thermoplastic resin (hereinafter, sometimes described as a thermoplastic resin (1)). It is preferred that the first resin layer contain a polyvinyl acetal resin (hereinafter, sometimes described as a polyvinyl acetal resin (1)) as the thermoplastic resin (1). The second resin layer contains a resin. It is preferred that the second resin layer contain a thermoplastic resin (hereinafter, sometimes described as a thermoplastic resin (2)). It is preferred that the second resin layer contain a polyvinyl acetal resin (hereinafter, sometimes described as a polyvinyl acetal resin (2)) as the thermoplastic resin (2). The thermoplastic resin (1) and the thermoplastic resin (2) may be the same as or different from each other. The polyvinyl acetal resin (1) and the polyvinyl acetal resin (2) may be the same or different from each other. One kind of each of the thermoplastic resin (1) and the thermoplastic resin (2) may be used alone, and two or more kinds thereof may be used in combination. One kind of each of the polyvinyl acetal resin (1) and the polyvinyl acetal resin (2) may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, and a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the aforementioned lower limit or more, the penetration resistance of laminated glass is further enhanced. When the average polymerization degree is the aforementioned upper limit or less, formation of a light modulating body is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the light modulating body is sufficiently lowered. The number of carbon atoms of the acetal group in the polyvinyl acetal resin may be 4 or 5.

The aldehyde is not particularly limited. In general, an aldehyde having 1 to 10 carbon atoms is suitably used. Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group of each of the polyvinyl acetal resin (1) and the polyvinyl acetal resin (2) is preferably 25% by mole or more, more preferably 28% by mole or more, still more preferably 30% by mole or more, further preferably more than 31% by mole, still further preferably 31.5% by mole or more, especially preferably 32% by mole or more, most preferably 33% by mole or more and is preferably 38% by mole or less, more preferably 37% by mole or less, further preferably 36.5% by mole or less, especially preferably 36% by mole or less. When the content of the hydroxyl group is the above-described lower limit or more or more than the above-described lower limit, the adhesive force of the light modulating body is further enhanced. Moreover, when the content of the hydroxyl group is the above upper limit or less, the flexibility of the light modulating body is enhanced and the handling of the light modulating body is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree of each of the polyvinyl acetal resin (1) and the polyvinyl acetal resin (2) is preferably 0.01% by mole or more, more preferably 0.5% by mole or more and is preferably 10% by mole or less, more preferably 2% by mole or less. When the acetylation degree is the aforementioned lower limit or more, the compatibility between the polyvinyl acetal resin and a plasticizer is enhanced. When the acetylation degree is the aforementioned upper limit or less, the moisture resistance of the light modulating body and laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of each of the polyvinyl acetal resin (1) and the polyvinyl acetal resin (2) (the butyralization degree in the case of a polyvinyl butyral resin) is preferably 55% by mole or more, more preferably 60% by mole or more and is preferably 75% by mole or less, more preferably 71% by mole or less. When the acetalization degree is the aforementioned lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin in the first resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin in the first resin layer, the content of the polyvinyl acetal resin is preferably 100% by weight or less. It is preferred that the main ingredient (50% by weight or more) of the thermoplastic resin of the first resin layer be a polyvinyl acetal resin.

In 100% by weight of the thermoplastic resin in the second resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second resin layer, the content of the polyvinyl acetal resin is preferably 100% by weight or less. It is preferred that the main ingredient (50% by weight or more) of the thermoplastic resin of the second resin layer be a polyvinyl acetal resin.

<Plasticizer>

From the viewpoint of further enhancing the adhesive force of the light modulating body, it is preferred that the first resin layer contain a plasticizer (hereinafter, sometimes described as a plasticizer (1)). From the viewpoint of further enhancing the adhesive force of the light modulating body, it is preferred that the second resin layer contain a plasticizer (hereinafter, sometimes described as a plasticizer (2)). It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, and tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, and benzoic acid, and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, and azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, and triisopropyl phosphate, and the like.

It is preferred that the plasticizer be a diester plasticizer represented by the following formula (1).

[Chemical 1]

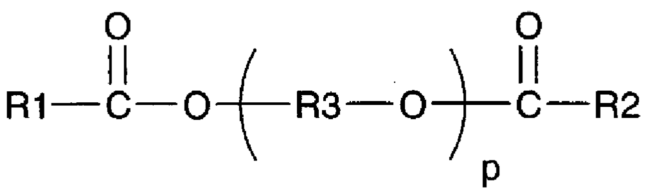

...(1)

In the formula (1), R1 and R2 each represent an organic group having 2 to 10 carbon atoms, R3 represents an ethylene group, an isopropylene group, or an n-propylene group, and p represents an integer of 3 to 10. R1 and R2 in the formula (1) each are preferably an organic group having 5 to 10 carbon atoms, and more preferably an organic group having 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the first resin layer, the content of the plasticizer (1) relative to 100 parts by weight of the thermoplastic resin (1) is defined as content (1). In the second resin layer, the content of the plasticizer (2) relative to 100 parts by weight of the thermoplastic resin (2) is defined as content (2). Each of the content (1) and the content (2) is preferably 5 parts by weight or more, more preferably 10 parts by weight or more, still more preferably 15 parts by weight or more, further preferably 20 parts by weight or more, especially preferably 24 parts by weight or more, most preferably 25 parts by weight or more, and is preferably 45 parts by weight or less, more preferably 40 parts by weight or less, further preferably 35 parts by weight or less, especially preferably 32 parts by weight or less, most preferably 30 parts by weight or less. When the content (1) and the content (2) are the above lower limit or more, the flexibility of the light modulating body is enhanced and the handling of the light modulating body is facilitated. When the content (1) and the content (2) are the above upper limit or less, the penetration resistance of the laminated glass is further enhanced.

<Coloring agent>

The first resin layer may contain or need not contain a coloring agent. The second resin layer may contain or need not contain a coloring agent. It is preferred that the first resin layer contain a coloring agent. It is preferred that the second resin layer contain a coloring agent. By using the coloring agent, it is possible to favorably color the light modulating body to desired color tone. One kind of the coloring agent may be used alone and two or more kinds thereof may be used in combination. The first resin layer may contain only one kind of coloring agent, may contain two or more kinds of coloring agents, may contain three or more kinds of coloring agents, may contain ten or less kinds of coloring agents, and may contain five or less kinds of coloring agents. The second resin layer may contain only one kind of coloring agent, may contain two or more kinds of coloring agents, may contain three or more kinds of coloring agents, may contain ten or less kinds of coloring agents, and may contain five or less kinds of coloring agents.

In order to favorably make the first resin layer and the second resin layer have different colors, it is preferred that the first resin layer contain a coloring agent, the second resin layer contain or do not contain a coloring agent, and when the second resin layer contains a coloring agent, the coloring agent in the first resin layer contain a coloring agent that is different from the coloring agent in the second resin layer. In order to make the first resin layer and the second resin layer have different colors, it is preferred that the first resin layer contain a coloring agent, the second resin layer contain a coloring agent, and the coloring agent in the first resin layer contain a coloring agent that is different from the coloring agent in the second resin layer.

Examples of the coloring agent include a pigment, and a dye, and the like. The coloring agent may be a pigment,

may be a dye, and may be both of a pigment and a dye. There also exists a coloring agent that is classified both as a pigment and as a dye.

Pigment:

The coloring agent may contain a pigment or may be a pigment. The first resin layer may contain or need not contain a pigment. The second resin layer may contain or need not contain a pigment. It is preferred that the first resin layer contain a pigment. It is preferred that the second resin layer contain a pigment. One kind of the pigment may be used alone, and two or more kinds thereof may be used in combination. The first resin layer may contain only one kind of pigment, may contain two or more kinds of pigments, may contain three or more kinds of pigments, may contain ten or less kinds of pigments, and may contain five or less kinds of pigments. The second resin layer may contain only one kind of pigment, may contain two or more kinds of pigments, may contain three or more kinds of pigments, may contain ten or less kinds of pigments, and may contain five or less kinds of pigments.

Examples of the pigment include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, dioxane, an azo compound and carbon black, and the like.

When the first resin layer contains a pigment, the content of the pigment in 100% by weight of the first resin layer is preferably 0.01% by weight or more, more preferably 0.02% by weight or more, and is preferably 0.15% by weight or less, more preferably 0.12% by weight or less. When the content of the pigment is the above lower limit or more and the above upper limit or less, it is possible to exert the effect of the present invention more effectively.

When the second resin layer contains a pigment, the content of the pigment in 100% by weight of the second resin layer is preferably 0.01% by weight or more, more preferably 0.02% by weight or more, and is preferably 0.15% by weight or less, more preferably 0.12% by weight or less. When the content of the pigment is the above lower limit or more and the above upper limit or less, it is possible to exert the effect of the present invention more effectively.

Dye:

The coloring agent may contain a dye or may be a dye. The first resin layer may contain or need not contain a dye. The second resin layer may contain or need not contain a dye. It is preferred that the first resin layer contain a dye. It is preferred that the second resin layer contain a dye. One kind of the dye may be used alone, and two or more kinds thereof may be used in combination. The first resin layer may contain only one kind of dye, may contain two or more kinds of dyes, may contain three or more kinds of dyes, may contain ten or less kinds of dyes, and may contain five or less kinds of dyes. The second resin layer may contain only one kind of dye, may contain two or more kinds of dyes, may contain three or more kinds of dyes, may contain ten or less kinds of dyes, and may contain five or less kinds of dyes.

Examples of the dye include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, dioxane, and an azo compound, and the like.

When the first resin layer contains a dye, the content of the dye in 100% by weight of the first resin layer is preferably 0.00001% by weight or more, more preferably 0.0001% by weight or more, further preferably 0.001% by weight or more, and is preferably less than 0.015% by weight, more preferably 0.01% by weight or less. When the content of the dye is the above lower limit or more and the above upper limit or less (or less than the above upper limit), it is possible to exert the effect of the present invention more effectively.

When the second resin layer contains a dye, the content of the dye in 100% by weight of the second resin layer is preferably 0.00001% by weight or more, more preferably 0.0001% by weight or more, further preferably 0.001% by weight or more, and is preferably less than 0.015% by weight, more preferably 0.01% by weight or less. When the content of the dye is the above lower limit or more and the above upper limit or less (or less than the above upper limit), it is possible to exert the effect of the present invention more effectively.

When the first resin layer contains a coloring agent, the content of the coloring agent in 100% by weight of the first resin layer is preferably 0.00001% by weight or more, more preferably 0.0001% by weight or more, further preferably 0.001% by weight or more, and is preferably less than 0.015% by weight, more preferably 0.01% by weight or less. When the content of the coloring agent is the above lower limit or more and the above upper limit or less (or less than the above upper limit), it is possible to exert the effect of the present invention more effectively.

When the second resin layer contains a coloring agent, the content of the coloring agent in 100% by weight of the second resin layer is preferably 0.00001% by weight or more, more preferably 0.0001% by weight or more, further preferably 0.001% by weight or more, and is preferably less than 0.015% by weight, more preferably 0.01% by weight or less. When the content of the coloring agent is the above lower limit or more and the above upper limit or less (or less than

the above upper limit), it is possible to exert the effect of the present invention more effectively.

it is preferred that the content (% by weight) of the coloring agent in 100% by weight of the first resin layer be different from the content (% by weight) of the coloring agent in 100% by weight of the second resin layer.

<Metal salt>

It is preferred that the first resin layer or the second resin layer contain at least one kind of metal salt (hereinafter, sometimes described as Metal salt M) of alkali metal salts and alkali earth metal salts. It is preferred that the first resin layer contain the Metal salt M. It is preferred that the second resin layer contain the Metal salt M. The alkali earth metal means six metals of Be, Mg, Ca, Sr, Ba, and Ra. By the use of the Metal salt M, controlling the adhesivity between the light modulating body and a laminated glass member or the adhesivity between respective layers in the light modulating body is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M contained in the light modulating body contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, and potassium 2-ethylhexanoate, and the like.

The total of the contents of Mg and K in the layer containing the Metal salt M (the first resin layer or the second resin layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the light modulating body and a laminated glass member or the adhesivity between respective layers in the light modulating body can be further well controlled.

<Ultraviolet ray screening agent>

It is preferred that the first resin layer or the second resin layer contain an ultraviolet ray screening agent. It is preferred that the first resin layer contain an ultraviolet ray screening agent. It is preferred that the second resin layer contain an ultraviolet ray screening agent. By the use of an ultraviolet ray screening agent, the visible light transmittance becomes still less likely to decrease even when the light modulating body and the laminated glass are used for a long period. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), and an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, and particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, and cerium oxide, and the like. Furthermore, with regard to the ultraviolet ray screening agent containing a metal oxide, the

surface may be coated. Examples of the coating material for the surface of the ultraviolet ray screening agent containing a metal oxide include an insulating metal oxide, a hydrolyzable organosilicon compound, and a silicone compound, and the like.

Examples of the insulating metal oxide include silica, alumina, and zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), and 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl) oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of a layer containing an ultraviolet ray screening agent (first resin layer or second resin layer), the content of the ultraviolet ray screening agent is preferably 0.1% by weight or more, more preferably 0.2% by weight or more, further preferably 0.3% by weight or more, especially preferably 0.5% by weight or more, and is preferably 2.5% by weight or less, more preferably 2% by weight or less, further preferably 1% by weight or less, especially preferably 0.8% by weight or less. In particular, by setting the content of the ultraviolet ray screening agent to be 0.2% by weight or more in 100% by weight of a layer containing the ultraviolet ray screening agent, with regard to the light modulating body and laminated glass, the lowering in visible light transmittance thereof after the lapse of a certain period of time can be significantly suppressed.

<Oxidation inhibitor>

It is preferred that the first resin layer or the second resin layer contain an oxidation inhibitor. It is preferred that the first resin layer contain an oxidation inhibitor. It is preferred that the second resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, and a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate] methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid) ethylenebis (oxyethylene), and the like. One kind or two or more kinds among these oxidation inhibitors are suitably used.

Examples of the phosphorus-based oxidation inhibitor include tridecyl phosphite, tris(tridecyl) phosphite,

triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, and 2,2'-methylenebis (4, 6-di-t-butyl-1-phenyloxy) (2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., and "IRGANOX 1010" available from BASF Japan Ltd., and the like.

In 100% by weight of the layer containing the oxidation inhibitor (the first resin layer or the second resin layer), the content of the oxidation inhibitor is preferably 0.03% by weight or more, more preferably 0.1% by weight or more. When the content of the oxidation inhibitor is the above lower limit or more, it is possible to keep the visible light transmittance of the light modulating body and the laminated glass high for a long term. Moreover, since an effect commensurate with the addition of an oxidation inhibitor is not attained, it is preferred that the content of the oxidation inhibitor be 2% by weight or less in 100% by weight of the layer containing the oxidation inhibitor (the first resin layer or the second resin layer).

<Other ingredients>

Each of the first resin layer and the second resin layer may contain additives such as heat shielding particles, a light stabilizer, a coupling agent, a dispersing agent, a surfactant, a flame retardant, an antistatic agent, an adhesive force adjusting agent other than metal salt, a moisture-resistance agent, a fluorescent brightening agent, and an infrared ray absorber, as necessary. One kind of these additives may be used alone, and two or more kinds thereof may be used in combination.

Examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like.

The average particle diameter of the heat shielding particles is preferably 0.01 μm or more, more preferably 0.02 μm or more, and is preferably 0.1 μm or less, more preferably 0.05 μm or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

<Other details of first and second resin layers>

An average thickness of the first resin layer and an average thickness of the second resin layer may be the same or different from each other. An average thickness of the first resin layer may be larger than or smaller than an average thickness of the second resin layer.

An average thickness of the first resin layer is preferably 50 μm or more, more preferably 100 μm or more, still more preferably 200 μm or more, further preferably 300 μm or more, especially preferably 380 μm or more, and is preferably 1000 μm or less, more preferably 900 μm or less, further preferably 800 μm or less, especially preferably 760 μm or less. When the average thickness of the first resin layer is the above lower limit or more, it is possible to enhance the penetration resistance of the obtained laminated glass. When the average thickness of the first resin layer is the above upper limit or less, it is possible to enhance the transparency of the obtained laminated glass.

An average thickness of the second resin layer is preferably 50 μm or more, more preferably 100 μm or more, still more preferably 200 μm or more, further preferably 300 μm or more, especially preferably 380 μm or more, and is preferably 1000 μm or less, more preferably 900 μm or less, further preferably 800 μm or less, especially preferably 760 μm or less. When the average thickness of the second resin layer is the above lower limit or more, it is possible to enhance the penetration resistance of the obtained laminated glass. When the average thickness of the second resin layer is the above upper limit or less, it is possible to enhance the transparency of the obtained laminated glass.

(Other details of light modulating body)

The light modulating body includes a first resin layer, a light modulating layer, and a second resin layer. The light

modulating body may include or need not include other layer than these three layers. In the light modulating body, it is preferred that the first resin layer and the light modulating layer be in contact with each other, and the second resin layer and the light modulating layer be in contact with each other.

It is preferred that the first resin layer be a surface layer (first surface layer) of the light modulating body. It is preferred that the second resin layer be a surface layer (second surface layer) of the light modulating body. It is preferred that the light modulating body have a three-layer structure made up of the first resin layer, the light modulating layer, and the second resin layer.

It is preferred that the light modulating body be a light modulating film.

The light modulating body has one end and the other end being at an opposite side of the one end. The one end and the other end are both end parts facing each other in the light modulating body.

The distance between one end and the other end of the light modulating body is preferably 0.5 m or more, more preferably 0.8 m or more, especially preferably 1.0 m or more, and is preferably 3.0 m or less, more preferably 2.0 m or less, especially preferably 1.5 m or less.

The maximum thickness of the light modulating body is preferably 0.1 mm or more, more preferably 0.25 mm or more, further preferably 0.5 mm or more, especially preferably 0.8 mm or more, and is preferably 3.8 mm or less, more preferably 2.0 mm or less, further preferably 1.5 mm or less.

The method for producing the light modulating body is not particularly limited. For example, a method of thermal compression bonding a laminate in which the first resin layer, the light modulating layer, and the second resin layer are laminated can be recited.

For the reason of excellent production efficiency of the light modulating body, it is preferred that the first resin layer and the second resin layer contain the same polyvinyl acetal resin. For the reason of excellent production efficiency of the light modulating body, it is preferred that the first resin layer and the second resin layer contain the same polyvinyl acetal resin and the same plasticizer.

(Laminated glass (light control glass))

A laminated glass according to the present invention includes a first laminated glass member, a second laminated glass member and the light modulating body described above. In the laminated glass according to the present invention, the light modulating body is arranged between the first laminated glass member and the second laminated glass member.

Fig. 2 is a sectional view schematically showing an example of laminated glass prepared with the light modulating body shown in Fig. 1.

A laminated glass 31 shown in Fig. 2 includes a first laminated glass member 21, a second laminated glass member 22 and the light modulating body 11. The light modulating body 11 is arranged between the first laminated glass member 21 and the second laminated glass member 22 and to be sandwiched therebetween.

The first laminated glass member 21 is layered on a first surface of the light modulating body 11. The second laminated glass member 22 is layered on a second surface opposite to the first surface of the light modulating body 11. The first laminated glass member 21 is layered on an outer surface of the first resin layer 1. The second laminated glass member 22 is layered on an outer surface of the second resin layer 2.

It is preferred that the first laminated glass member be the first glass plate. It is preferred that the second laminated glass member be the second glass plate.

Examples of the first and second laminated glass members include a glass plate, and a PET (polyethylene terephthalate) film, and the like. As the laminated glass, laminated glass in which a light modulating body is sandwiched between a glass plate and a PET film or the like, as well as laminated glass in which a light modulating body is sandwiched between two glass plates, is included. The laminated glass is a laminate including a glass plate, and it is preferred that at least one glass plate be used. It is preferred that each of the first laminated glass member and the second laminated glass member be a glass plate or a PET film, and the laminated glass include a glass plate as at least one of the first laminated glass member and the second laminated glass member. It is especially preferred that both of the first and second laminated glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and green glass, and the like. The organic glass is synthetic resin glass substituted for inorganic glass. Examples of the organic glass include a polycarbonate plate, and a poly (meth) acrylic resin plate, and the like. Examples of the poly(meth)acrylic resin plate include a polymethyl (meth)acrylate plate, and the like.

Each of the first laminated glass member and the second laminated glass member may be heat-ray absorbing plate glass, heat-ray reflecting plate glass or green glass. In these case, heat-ray absorbing plate glass may be used, heat-ray reflecting plate glass may be used, or green glass may be used. Each of the first laminated glass member and the second laminated glass member may be clear glass. The first laminated glass member and the second laminated glass

member may be the same or different from each other.

The thickness of each of the first laminated glass member and the second laminated glass member is preferably 1 mm or more, and is preferably 5 mm or less, more preferably 3 mm or less. Moreover, when the laminated glass member is a glass plate, the thickness of the glass plate is preferably 0.5 mm or more, more preferably 0.7 mm or more, and is preferably 5 mm or less, more preferably 3 mm or less. When the laminated glass member is a PET film, the thickness of the PET film is preferably 0.03 mm or more and is preferably 0.5 mm or less.

In the present invention, it is preferred to measure color coordinate a*, color coordinate b*, color coordinate L* and chromatic value C* in L*a*b* color system of visible light transmission color for the laminated glass. Also, in the present invention, it is preferred to measure color coordinate a*, color coordinate b*, color coordinate L* and chromatic value C* in L*a*b* color system of visible light reflection color for the laminated glass. These color coordinates and chromatic value C* are measured in the same manner as the method described above except that laminated glass itself is used as the above-described measurement sample (laminated glass for measurement).

<Color coordinate a*, color coordinate b*, color coordinate L* and chromatic value C* of visible light transmission color>

Color coordinate a* in L*a*b* color system of visible light transmission color of the laminated glass under application of voltage is preferably -15 or more, more preferably -10 or more, further preferably -5 or more, and is preferably 15 or less, more preferably 10 or less, further preferably 5 or less. When the color coordinate a* is the above lower limit or more and the above upper limit or less, it is possible to make the laminated glass being an achromatic color or a color close to achromatic color under application of voltage.

Color coordinate b* in L*a*b* color system of visible light transmission color of the laminated glass under application of voltage is preferably -15 or more, more preferably -10 or more, further preferably -5 or more, and is preferably 15 or less, more preferably 10 or less, further preferably 5 or less. When the color coordinate b* is the above lower limit or more and the above upper limit or less, it is possible to make the laminated glass being an achromatic color or a color close to achromatic color under application of voltage.

Color coordinate L* in L*a*b* color system of visible light transmission color of the laminated glass under application of voltage is preferably 5 or more, more preferably 8 or more, further preferably 10 or more, and is preferably 80 or less, more preferably 70 or less, still more preferably 60 or less, further preferably 50 or less, still further preferably 40 or less, especially preferably 30 or less, most preferably 25 or less. When the color coordinate L* is the above lower limit or more and the above upper limit or less, it is possible to make the laminated glass being an achromatic color or a color close to achromatic color under application of voltage.

Chromatic value C* in L*a*b* color system of visible light transmission color of the laminated glass under application of voltage is preferably more than 0, more preferably 1 or more, and is preferably 25 or less, more preferably 15 or less, further preferably 10 or less, especially preferably 8 or less, most preferably 5 or less. When the chromatic value C* is the above lower limit or more (or more than the above lower limit) and the above upper limit or less, it is possible to make the laminated glass being an achromatic color or a color close to achromatic color under application of voltage.

It is preferred that an applied voltage for measuring "color coordinate a*, color coordinate b*, color coordinate L* and chromatic value C* in L*a*b* color system of visible light transmission color of the laminated glass under application of voltage" be a voltage within the range of 5 V or more and 100 V or less. The applied voltage is, for example, 30 V.

<Color coordinate a*, color coordinate b*, color coordinate L* and chromatic value C* of visible light reflection color>

Under no application of voltage, color coordinate a* in L*a*b* color system of visible light reflection color of the laminated glass when measured from the first laminated glass member side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the laminated glass good when viewed from the first laminated glass member side under no application of voltage.

Under no application of voltage, color coordinate b* in L*a*b* color system of visible light reflection color of the laminated glass when measured from the first laminated glass member side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate b* is the above lower limit or more and the above upper limit or less, it is possible to make the color of the laminated glass good when viewed from the first laminated glass member side under no application of voltage.

Under no application of voltage, color coordinate L* in L*a*b* color system of visible light reflection color of the laminated glass when measured from the first laminated glass member side is preferably 5 or more, more preferably 10 or more, further preferably 20 or more, and is preferably 60 or less, more preferably 50 or less, further preferably 40 or less,

especially preferably 30 or less. When the color coordinate L* is the above lower limit or more and the above upper limit or less, it is possible to make the color of the laminated glass good when viewed from the first laminated glass member side under no application of voltage.

Under no application of voltage, chromatic value C* in L*a*b* color system of visible light reflection color of the laminated glass when measured from the first laminated glass member side is preferably more than 0, more preferably 0.2 or more, and is preferably 30 or less, more preferably 20 or less, further preferably 10 or less, especially preferably 5 or less, most preferably 3 or less. When the chromatic value C* is the above lower limit or more (or more than the above lower limit) and the above upper limit or less, it is possible to make the color of the laminated glass good when viewed from the first laminated glass member side under no application of voltage.

Under no application of voltage, color coordinate a* in L*a*b* color system of visible light reflection color of the laminated glass when measured from the second laminated glass member side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate a* is the above lower limit or more and the above upper limit or less, it is possible to make the color of the laminated glass good when viewed from the second laminated glass member side under no application of voltage.

Under no application of voltage, color coordinate b* in L*a*b* color system of visible light reflection color of the laminated glass when measured from the second laminated glass member side is preferably -20 or more, more preferably -15 or more, further preferably -10 or more, especially preferably -5 or more, most preferably -3 or more, and is preferably 20 or less, more preferably 15 or less, further preferably 10 or less, especially preferably 5 or less, most preferably 3 or less. When the color coordinate b* is the above lower limit or more and the above upper limit or less, it is possible to make the color of the laminated glass good when viewed from the second laminated glass member side under no application of voltage.

Under no application of voltage, color coordinate L* in L*a*b* color system of visible light reflection color of the laminated glass when measured from the second laminated glass member side is preferably 5 or more, more preferably 10 or more, further preferably 20 or more, especially preferably 30 or more, most preferably 35 or more, and is preferably 60 or less, more preferably 50 or less, further preferably 40 or less. When the color coordinate L* is the above lower limit or more and the above upper limit or less, it is possible to make the color of the laminated glass good when viewed from the second laminated glass member side under no application of voltage.

Under no application of voltage, chromatic value C* in L*a*b* color system of visible light reflection color of the laminated glass when measured from the second laminated glass member side is preferably more than 0, more preferably 0.5 or more, and is preferably 30 or less, more preferably 20 or less, further preferably 10 or less, especially preferably 5 or less. When the chromatic value C* is the above lower limit or more (or more than the above lower limit) and the above upper limit or less, it is possible to make the color of the laminated glass good when viewed from the second laminated glass member side under no application of voltage.

Color difference in L*a*b* color system between visible light reflection color of the laminated glass when measured from the first laminated glass member side under no application of voltage and visible light reflection color of the laminated glass when measured from the second laminated glass member side under no application of voltage is preferably more than 0, more preferably 0.5 or more, further preferably 5 or more, especially preferably 10 or more, and is preferably 50 or less, more preferably 40 or less, further preferably 30 or less, especially preferably 20 or less. When the color difference is the above lower limit or more (or more than the above lower limit) and the above upper limit or less, the color difference when viewed from the first laminated glass member side and when viewed from the second laminated glass member side under no application of voltage is large, so that it is possible to enhance the designability of the laminated glass.

The method for producing the laminated glass is not particularly limited. First, the light modulating body is sandwiched between the first laminated glass member and the second laminated glass member to obtain a laminate. Then, for example, by passing the obtained laminate through pressure rolls or subjecting the obtained laminate to decompression suction in a rubber bag, the air remaining between the first and the second laminated glass members and the light modulating body is removed. Then, the laminate is preliminarily press-bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the light modulating body and the laminated glass can be used for automobiles, railway vehicles, aircraft, ships, and buildings, and the like. The light modulating body and the laminated glass can also be used for applications other than these applications. The light modulating body and the laminated glass can be used for applications such as window glass, show window, partition, wall glass, and the like. The partition may be a separator that separates seats of an automobile.

It is preferred that the light modulating body and the laminated glass be a light modulating body and a laminated

glass for vehicles or for buildings, respectively, and it is more preferred that the light modulating body and the laminated glass be a light modulating body and a laminated glass for vehicles, respectively.

Each of the light modulating body and the laminated glass can be used for a windshield, side glass, rear glass, roof glass or glass for backlight of an automobile, and the like. The light modulating body and the laminated glass are suitably used for automobiles. The light modulating body is suitably used for obtaining laminated glass for an automobile.

It is preferred that the automobile include an automobile body, and laminated glass serving as window glass of the automobile, and the laminated glass be the laminated glass described above. Examples of the window glass include a windshield, side glass, rear glass, roof glass and glass for backlight, and the like. In the above automobile, with regard to the first laminated glass member and the second laminated glass member, the first laminated glass member side may be interior side of the automobile or exterior side of the automobile. In the above automobile, with regard to the first resin layer and the second resin layer, the first resin layer side may be interior side of the automobile or exterior side of the automobile.

Hereinafter, the present invention will be described in more detail with reference to examples and comparative examples. The present invention is not limited only to these examples.

In polyvinyl acetal resins used, n-butyraldehyde that has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

(Light modulating layer)

Light modulating layer P of PDLC method
Light modulating layer E of electrochromic method

The followings were prepared as materials of the first and the second resin layers.

(Thermoplastic resin)

Polyvinyl acetal resin (polyvinyl butyral resin, average polymerization degree of 1700, content of hydroxyl group of 30% by mole, acetylation degree of 1% by mole, acetalization degree (butyralization degree) of 69% by mole)

(Plasticizer)

3GO: triethylene glycol di-2-ethylhexanoate

(Coloring agent)

Phthalocyanine-based pigment (P.B.15-1)
Perylene-based pigment (P.R.149)
Phthalocyanine-based pigment (P.G.7)
Carbon black (P.Bk.7)

(Metal salt)

Mg mixture (50 : 50 (weight ratio) mixture of magnesium 2-ethylbutyrate and magnesium acetate)

(Ultraviolet ray screening agent)

Tinuvin 326: 2-(2'-hydroxy-3'-t-butyl-5-methylphenyl)-5-chlorobenzotriazole ("Tinuvin 326" available from BASF Japan Ltd.)

(Oxidation inhibitor)

BHT: 2,6-di-t-butyl-p-cresol

Using the above-described materials, a resin composition was prepared in the following manner.

Preparation of resin composition A for forming resin layer:

The following ingredients were mixed, and kneaded sufficiently with a mixing roll to obtain a composition A for forming a resin layer.

Polyvinyl acetal resin: 100 parts by weight
3GO: 40 parts by weight
Phthalocyanine-based pigment (P.B.15-1): an amount which is to be 0.016% by weight in the obtained resin layer
Perylene-based pigment (P.R.149): an amount which is to be 0.002% by weight in the obtained resin layer
Phthalocyanine-based pigment (P.G.7): an amount which is to be 0.002% by weight in the obtained resin layer
Carbon black (P.Bk.7): an amount which is to be 0.030% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition B for forming resin layer:

The following ingredients were mixed, and kneaded sufficiently with a mixing roll to obtain a composition B for forming a resin layer.

Polyvinyl acetal resin: 100 parts by weight
3GO: 40 parts by weight
Phthalocyanine-based pigment (P.B.15-1): an amount which is to be 0.018% by weight in the obtained resin layer
Perylene-based pigment (P.R.149): an amount which is to be 0.006% by weight in the obtained resin layer
Phthalocyanine-based pigment (P.G.7): an amount which is to be 0.010% by weight in the obtained resin layer
Carbon black (P.Bk.7): an amount which is to be 0.028% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition C for forming resin layer:

The following ingredients were mixed, and kneaded sufficiently with a mixing roll to obtain a composition C for forming a resin layer.

Polyvinyl acetal resin: 100 parts by weight
3GO: 40 parts by weight
Phthalocyanine-based pigment (P.G.7): an amount which is to be 0.048% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition D for forming resin layer:

The following ingredients were mixed, and kneaded sufficiently with a mixing roll to obtain a composition D for forming a resin layer.

Polyvinyl acetal resin: 100 parts by weight
3GO: 40 parts by weight
Phthalocyanine-based pigment (P.B.15-1): an amount which is to be 0.005% by weight in the obtained resin layer
Perylene-based pigment (P.R.149): an amount which is to be 0.004% by weight in the obtained resin layer
Carbon black (P.Bk.7): an amount which is to be 0.011% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition E for forming resin layer:

The following ingredients were mixed, and kneaded sufficiently with a mixing roll to obtain a composition E for forming a resin layer.

Polyvinyl acetal resin: 100 parts by weight
3GO: 40 parts by weight
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition F for forming resin layer:
The following ingredients were mixed, and kneaded sufficiently with a mixing roll to obtain a composition F for forming a resin layer.

Polyvinyl acetal resin: 100 parts by weight
3GO: 40 parts by weight
Carbon black (P.Bk.7): an amount which is to be 0.031% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition G for forming resin layer:
The following ingredients were mixed, and kneaded sufficiently with a mixing roll to obtain a composition G for forming a resin layer.

Polyvinyl acetal resin: 100 parts by weight
3GO: 40 parts by weight
Perylene-based pigment (P.R.149): an amount which is to be 0.016% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition H for forming resin layer:
The following ingredients were mixed, and kneaded sufficiently with a mixing roll to obtain a composition H for forming a resin layer.

Polyvinyl acetal resin: 100 parts by weight
3GO: 40 parts by weight
Phthalocyanine-based pigment (P.B.15-1): an amount which is to be 0.0165% by weight in the obtained resin layer
Perylene-based pigment (P.R.149): an amount which is to be 0.023% by weight in the obtained resin layer
Phthalocyanine-based pigment (P.G.7): an amount which is to be 0.0016% by weight in the obtained resin layer
Carbon black (P.Bk.7): an amount which is to be 0.0309% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition I for forming resin layer:
The following ingredients were mixed, and kneaded sufficiently with a mixing roll to obtain a composition I for forming a resin layer.

Polyvinyl acetal resin: 100 parts by weight
3GO: 40 parts by weight
Phthalocyanine-based pigment (P.B.15-1): an amount which is to be 0.0143% by weight in the obtained resin layer
Perylene-based pigment (P.R.149): an amount which is to be 0.0068% by weight in the obtained resin layer

Carbon black (P.Bk.7): an amount which is to be 0.0063% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

Preparation of resin composition J for forming resin layer:
The following ingredients were mixed, and kneaded sufficiently with a mixing roll to obtain a composition J for forming a resin layer.
Polyvinyl acetal resin: 100 parts by weight
3GO: 40 parts by weight
Carbon black (P.Bk.7): an amount which is to be 0.0162% by weight in the obtained resin layer
Mg mixture: an amount that gives a magnesium amount of 70 ppm in the obtained resin layer
Tinuvin326: an amount which is to be 0.2% by weight in the obtained resin layer
BHT: an amount which is to be 0.2% by weight in the obtained resin layer

The following was prepared as a laminated glass member.
Clear glass A (thickness: 2.5mm, in conformance with JIS R3202:1996)

(Example 1)

Preparation of light modulating body:

The resin composition A was extruded with an extruder to obtain the first resin layer. Also, the resin composition F was extruded with an extruder to obtain the second resin layer. The first resin layer, the light modulating layer P, and the second resin layer were layered in this order to prepare a light modulating body having a three-layer structure (the first resin layer (380 μm thick)/light modulating layer P/the second resin layer (380 μm thick)).

Preparation of laminated glass:

The obtained light modulating body was sandwiched between two sheets of clear glass A (300 mm long × 300 mm wide) to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass.

(Examples 2 to 8 and Comparative Examples 1 to 4)

The resin compositions for forming the first and the second resin layers and the kinds of the light modulating layer were changed as described in the following table. Also, the thicknesses of the first and the second resin layers were changed as described in the following table. A light modulating body and a laminated glass were obtained in the same manner as that in Example 1 except for the above.

(Evaluation)

(1) Color coordinate of first, second resin layers, light modulating layer and light modulating body

The following color coordinates were measured according to the above-described method.
1) Color coordinate L*, color coordinate a*, color coordinate b* and chromatic value C* in L*a*b* color system of visible light transmission color of first resin layer
2) Color coordinate **L*,** color coordinate a* and color coordinate b* in L*a*b* color system of visible light reflection color of first resin layer
3) Color coordinate L*, color coordinate a* and color coordinate b* in L*a*b* color system of visible light transmission color of light modulating layer under no application of voltage

4) Color coordinate **L*,** color coordinate a* and color coordinate b* in L*a*b* color system of visible light reflection color of light modulating layer under no application of voltage
5) Color coordinate L*, color coordinate a*, color coordinate b* and chromatic value C* in L*a*b* color system of visible light transmission color of second resin layer
6) Color coordinate L*, color coordinate a* and color coordinate b* in L*a*b* color system of visible light reflection color of second resin layer
7) Color coordinate L*, color coordinate a*, color coordinate b* and chromatic value C* in L*a*b* color system of visible light reflection color of light modulating body when measured from the first resin layer side under no application of voltage
8) Color coordinate L*, color coordinate a*, color coordinate b* and chromatic value C* in L*a*b* color system of visible light reflection color of light modulating body when measured from the second resin layer side under no application of voltage
9) Color coordinate L*, color coordinate a*, color coordinate b* and chromatic value C* in L*a*b* color system of visible light transmission color of light modulating body under application of voltage (under application of voltage of 30V).

Also, the following was calculated from the measured results.
1) Color difference in L*a*b* color system between visible light transmission color of first resin layer and visible light transmission color of second resin layer
2) Color difference in L*a*b* color system between visible light reflection color of first resin layer and visible light reflection color of second resin layer
3) Color difference in L*a*b* color system between visible light transmission color of first resin layer and visible light transmission color of light modulating layer under no application of voltage
4) Color difference in L*a*b* color system between visible light transmission color of second resin layer and visible light transmission color of light modulating layer under no application of voltage
5) Value X determined by the above-described formula (X)
6) Value Y determined by the above-described formula (Y)
7) Color difference in L*a*b* color system between visible light reflection color of the above light modulating body when measured from the first resin layer side under no application of voltage, and visible light reflection color of the above light modulating body when measured from the second resin layer side under no application of voltage

(2) Visible light transmittance (Tv)

The following visible light transmittances were measured according to the above-described method.
1) Visible light transmittance of first resin layer
2) Visible light transmittance of second resin layer
3) Visible light transmittance of light modulating body under application of voltage (under application of voltage of 30V)

(3) Visible light spectrum

According to the method described above, visible light spectra in wavelengths of 380 nm to 780 nm of the first resin layer and the second resin layer were measured. From the obtained visible light spectra, respective visible light dominant wavelengths of the first resin layer and the second resin layer were obtained. In Tables, "-" for the visible light dominant wavelength means that the resin layer does not have a visible light dominant wavelength.
Also, from the visible light dominant wavelengths of the first resin layer and the second resin layer, a ratio of a peak height of the visible light dominant wavelength of the second resin layer to a peak height of the visible light dominant wavelength of the first resin layer (peak height of visible light dominant wavelength of second resin layer/peak height of visible light dominant wavelength of first resin layer) was determined.
The configurations and the results of light modulating bodies and laminated glasses are shown in the following Tables 1 to 9.

[Table 1]

| | | | | Example 1 | Example 2 | Example 3 | Example 4 |
|---|---|---|---|---|---|---|---|
| Kind of first laminated glass member | | | | A | A | A | A |
| First resin layer | Kind of resin composition | | | A | B | A | C |
| | Thickness | | mm | 0.38 | 0.76 | 0.38 | 0.76 |
| | Color | | | Gray | Gray | Gray | Green |
| | Visible light dominant wavelength | | nm | 580 | 575 | 580 | 645 |
| | Visible light transmittance Tv | | % | 20.0 | 4.1 | 20.0 | 63.0 |
| | Visible light transmission color | Color coordinate L* | | 52.2 | 24.0 | 52.2 | 87.2 |
| | | Color coordinate a* ($a_1$) | | -4.4 | -1.0 | -4.4 | -32.5 |
| | | Color coordinate b* ($b_1$) | | 2.5 | -0.4 | 2.5 | -0.7 |
| | | Chromatic value C* | | 5.1 | 1.1 | 5.1 | 32.5 |
| | Visible light reflection color | Color coordinate L* | | 26.7 | 25.1 | 25.1 | 32.5 |
| | | Color coordinate a* | | -0.2 | -0.1 | -0.1 | -8.6 |
| | | Color coordinate b* | | -0.7 | -0.6 | -0.6 | -1.0 |
| | | Chromatic value C* | | 0.8 | 0.6 | 0.6 | 8.6 |
| Light modulating layer | Kind | | | P | P | E | P |
| | Visible light transmission color under no application of voltage | Color coordinate L* | | 4.5 | 4.5 | 39.9 | 4.5 |
| | | Color coordinate a* | | 0.5 | 0.5 | -1.9 | 0.5 |
| | | Color coordinate b* | | 3.1 | 3.1 | -37.9 | 3.1 |
| | Visible light reflection color under no application of voltage | Color coordinate L* | | 47.0 | 47.0 | 25.7 | 47.0 |
| | | Color coordinate a* | | -2.0 | -2.0 | 0.6 | -2.0 |
| | | Color coordinate b* | | -2.8 | -2.8 | -3.4 | -2.8 |

(continued)

| | | | | Example 1 | Example 2 | Example 3 | Example 4 |
|---|---|---|---|---|---|---|---|
| Second resin layer | Kind of resin composition | | | F | E | F | G |
| | Thickness | | mm | 0.38 | 0.76 | 0.38 | 0.76 |
| | Color | | | Brown | Transparent | Brown | Red |
| | Visible light dominant wavelength | | nm | 420 | - | 420 | 475 |
| | Visible light transmittance Tv | | % | 28.1 | 88.8 | 28.1 | 50.3 |
| | Visible light transmission color | Color coordinate L* | | 58.7 | 95.6 | 58.7 | 70.1 |
| | | Color coordinate a* ($a_2$) | | 1.9 | -1. 7 | 1.9 | 40.2 |
| | | Color coordinate b* ($b_2$) | | 13.2 | 1.3 | 13.2 | 16.4 |
| | | Chromatic value C* | | 13.4 | 2.2 | 13.4 | 43.4 |
| | Visible light reflection color | Color coordinate L* | | 26.9 | 34.1 | 26.9 | 30.3 |
| | | Color coordinate a* | | 0.0 | -0.8 | 0.0 | 6.8 |
| | | Color coordinate b* | | -0.1 | -0.1 | -0.1 | 3.3 |
| | | Chromatic value C* | | 0.1 | 0.8 | 0.1 | 7.5 |
| Kind of second laminated glass member | | | | A | A | A | A |

[Table 2]

| | Example 1 | Example 2 | Example 3 | Example 4 |
|---|---|---|---|---|
| Ratio (peak height of visible light dominant wavelength of second resin layer/peak height of visible light dominant wavelength of first resin layer) | 0.98 | - | 0.98 | 0.59 |
| Color difference between visible light transmission color of first resin layer and visible light transmission color of second resin layer | 14.0 | 71.6 | 14.0 | 76.7 |
| Color difference between visible light reflection color of first resin layer and visible light reflection color of second resin layer | 0.8 | 9.1 | 1.8 | 16.1 |
| Sum of color coordinate a* of visible light transmission color of first resin layer and color coordinate a* of visible light transmission color of second resin layer | -2.6 | -2.7 | -2.6 | 7.7 |
| Absolute value of difference between color coordinate a* of visible light transmission color of first resin layer and color coordinate a* of visible light transmission color of second resin layer | 6.3 | 0.8 | 6.3 | 72.8 |

(continued)

| | Example 1 | Example 2 | Example 3 | Example 4 |
|---|---|---|---|---|
| Sum of color coordinate a* of visible light reflection color of first resin layer and color coordinate a* of visible light reflection color of second resin layer | -0.2 | -0.9 | -0.1 | -1.8 |
| Absolute value of difference between color coordinate a* of visible light reflection color of first resin layer and color coordinate a* of visible light reflection color of second resin layer | 0.3 | 0.6 | 0.2 | 15.4 |
| Sum of color coordinate b* of visible light transmission color of first resin layer and color coordinate b* of visible light transmission color of second resin layer | 15.7 | 0.9 | 15.7 | 15.7 |
| Absolute value of difference between color coordinate b* of visible light transmission color of first resin layer and color coordinate b* of visible light transmission color of second resin layer | 10.7 | 1.7 | 10.7 | 17.1 |
| Sum of color coordinate b* of visible light reflection color of first resin layer and color coordinate b* of visible light reflection color of second resin layer | -0.8 | -0.7 | -0.7 | 2.3 |
| Absolute value of difference between color coordinate b* of visible light reflection color of first resin layer and color coordinate b* of visible light reflection color of second resin layer | 0.7 | 0.5 | 0.5 | 4.3 |
| Value Y (= $[(a_1 + a_2)^2 + (b_1 + b_2)^2]^{1/2}$) | 15.94 | 2.85 | 15.94 | 17.45 |
| Color difference (A) between visible light transmission color of first resin layer and visible light transmission color of light modulating layer under no application of voltage | 48.0 | 19.9 | 42.3 | 89.2 |
| Color difference (B) between visible light transmission color of second resin layer and visible light transmission color of light modulating layer under no application of voltage | 55.2 | 91.2 | 54.6 | 77.8 |
| Absolute value of value X (= A - B) | 7.2 | 71.2 | 12.3 | 11.4 |

[Table 3]

| | | | | Example 1 | Example 2 | Example 3 | Example 4 |
|---|---|---|---|---|---|---|---|
| Light modulating body | Visible light reflection color under no application of voltage (Observation or measurement from first resin layer side) | Reflection color | | Gray | Gray | Gray | Green |
| | | Color coordinate L* | | 25.7 | 25.3 | 26.3 | 32.2 |
| | | Color coordinate a* | | 0.2 | -0.2 | 0.5 | -9.2 |
| | | Color coordinate b* | | -0.4 | -0.6 | -0.6 | -1.2 |
| | | Chromatic value C* | | 0.4 | 0.7 | 0.8 | 9.2 |
| | Visible light reflection color under no application of voltage (Observation or measurement from second resin layer side) | Reflection color | | Brown | White | Brown | Red |
| | | Color coordinate L* | | 28.5 | 36.2 | 25.8 | 30.7 |
| | | Color coordinate a* | | -0.1 | -1.3 | -0.1 | 6.7 |
| | | Color coordinate b* | | 0.7 | -2.9 | -0.9 | 3.0 |
| | | Chromatic value C* | | 0.7 | 3.2 | 0.9 | 7.4 |
| | Color difference between visible light reflection color of light modulating body when measured from first resin layer side under no application of voltage, and visible light reflection color of light modulating body when measured from second resin layer side under no application of voltage | | | 3.0 | 11.2 | 0.8 | 16.5 |
| | Visible light transmission color under application of voltage | Transmission color | | Light gray | Gray | Gray | Gray |
| | | Visible light transmittance Tv | % | 8.1 | 3.8 | 1.0 | 30.0 |
| | | Color coordinate L* | | 34.1 | 23.3 | 11.0 | 59.9 |
| | | Color coordinate a* | | -3.3 | -1.2 | -6.7 | 7.0 |
| | | Color coordinate b* | | 6.5 | 0.1 | -11.1 | 9.1 |
| | | Chromatic value C* | | 7.3 | 1.2 | 13.0 | 11.5 |

[Table 4]

| | | Example 5 | Example 6 | Example 7 | Example 8 |
|---|---|---|---|---|---|
| Kind of first laminated glass member | | A | A | A | A |

(continued)

| | | | | Example 5 | Example 6 | Example 7 | Example 8 |
|---|---|---|---|---|---|---|---|
| First resin layer | Kind of resin composition | | | D | H | I | I |
| | Thickness | | mm | 0.76 | 0.38 | 0.38 | 0.38 |
| | Color | | | Gray | Gray | Blue gray | Blue gray |
| | Visible light dominant wavelength | | nm | 560 | 580 | 610 | 610 |
| | Visible light transmittance Tv | | % | 25.0 | 32.1 | 43.5 | 43.5 |
| | Visible light transmission color | Color coordinate L* | | 56.3 | 63.8 | 72.2 | 72.2 |
| | | Color coordinate a* ($a_1$) | | 2.8 | -4.0 | 0.2 | 0.2 |
| | | Color coordinate b* ($b_1$) | | 5.1 | 2.0 | -4.0 | -4.0 |
| | | Chromatic value C* | | 5.8 | 4.4 | 4.0 | 4.0 |
| | Visible light reflection color | Color coordinate L* | | 26.5 | 27.5 | 31.5 | 31.5 |
| | | Color coordinate a* | | 0.1 | -0.5 | -1.1 | -1.1 |
| | | Color coordinate b* | | -0.1 | -0.7 | 0.3 | 0.3 |
| | | Chromatic value C* | | 1.0 | 0.8 | 1.1 | 1.1 |
| Light modulating layer | Kind | | | E | E | E | P |
| | Visible light transmission color under no application of voltage | Color coordinate L* | | 39.9 | 39.9 | 39.9 | 4.5 |
| | | Color coordinate a* | | -1.9 | -1.9 | -1.9 | 0.5 |
| | | Color coordinate b* | | -37.9 | -37.9 | -37.9 | 3.1 |
| | Visible light reflection color under no application of voltage | Color coordinate L* | | 25.7 | 25.7 | 25.7 | 47.0 |
| | | Color coordinate a* | | 0.6 | 0.6 | 0.6 | -2.0 |
| | | Color coordinate b* | | -3.4 | -3.4 | -3.4 | -2.8 |

(continued)

| | | | | Example 5 | Example 6 | Example 7 | Example 8 |
|---|---|---|---|---|---|---|---|
| Second resin layer | Kind of resin composition | | | E | J | A | A |
| | Thickness | | mm | 0.76 | 0.76 | 0.38 | 0.38 |
| | Color | | | Transparent | Brown | Gray | Gray |
| | Visible light dominant wavelength | | nm | - | 420 | 580 | 580 |
| | Visible light transmittance Tv | | % | 88.8 | 47.9 | 20.0 | 20.0 |
| | Visible light transmission color | Color coordinate L* | | 95.6 | 74.0 | 52.2 | 52.2 |
| | | Color coordinate a* ($a_2$) | | -1,7 | 0.5 | -4.4 | -4.4 |
| | | Color coordinate b* ($b_2$) | | 1.3 | 9.0 | 2.5 | 2.5 |
| | | Chromatic value C* | | 2.2 | 9.0 | 5.1 | 5.1 |
| | Visible light reflection color | Color coordinate L* | | 34.1 | 28.8 | 25.1 | 26.7 |
| | | Color coordinate a* | | -0.8 | 0.0 | -0.1 | -0.2 |
| | | Color coordinate b* | | -0.1 | 0.6 | -0.6 | -0.7 |
| | | Chromatic value C* | | 0.8 | 0.6 | 0.6 | 0.8 |
| Kind of second laminated glass member | | | | A | A | A | A |

[Table 5]

| | Example 5 | Example 6 | Example 7 | Example 8 |
|---|---|---|---|---|
| Ratio (peak height of visible light dominant wavelength of second resin layer/peak height of visible light dominant wavelength of first resin layer) | - | 0.79 | 0.41 | 0.41 |
| Color difference between visible light transmission color of first resin layer and visible light transmission color of second resin layer | 39.7 | 13.2 | 21.5 | 21.5 |
| Color difference between visible light reflection color of first resin layer and visible light reflection color of second resin layer | 7.8 | 1.8 | 6.5 | 5.1 |
| Sum of color coordinate a* of visible light transmission color of first resin layer and color coordinate a* of visible light transmission color of second resin layer | 1.0 | -3.5 | -4.3 | -4.3 |
| Absolute value of difference between color coordinate a* of visible light transmission color of first resin layer and color coordinate a* of visible light transmission color of second resin layer | 4.5 | 4.4 | 4.6 | 4.6 |

(continued)

| | Example 5 | Example 6 | Example 7 | Example 8 |
|---|---|---|---|---|
| Sum of color coordinate a* of visible light reflection color of first resin layer and color coordinate a* of visible light reflection color of second resin layer | -0.7 | -0.6 | -1.2 | -1.3 |
| Absolute value of difference between color coordinate a* of visible light reflection color of first resin layer and color coordinate a* of visible light reflection color of second resin layer | 0.9 | 0.5 | 0.9 | 0.8 |
| Sum of color coordinate b* of visible light transmission color of first resin layer and color coordinate b* of visible light transmission color of second resin layer | 6.4 | 11.0 | -1.5 | -1.5 |
| Absolute value of difference between color coordinate b* of visible light transmission color of first resin layer and color coordinate b* of visible light transmission color of second resin layer | 3.8 | 7.0 | 6.5 | 6.5 |
| Sum of color coordinate b* of visible light reflection color of first resin layer and color coordinate b* of visible light reflection color of second resin layer | -1. 1 | -0.1 | -0.3 | -0.4 |
| Absolute value of difference between color coordinate b* of visible light reflection color of first resin layer and color coordinate b* of visible light reflection color of second resin layer | 0.9 | 1.2 | 0.9 | 1.0 |
| Value Y (= $[(a_1 + a_2)^2 + (b_1 + b_2)^2]^{1/2}$) | 6.51 | 11.54 | 4.54 | 4.54 |
| Color difference (A) between visible light transmission color of first resin layer and visible light transmission color of light modulating layer under no application of voltage | 46.3 | 46.5 | 46.8 | 68.1 |
| Color difference (B) between visible light transmission color of second resin layer and visible light transmission color of light modulating layer under no application of voltage | 68.1 | 58.0 | 42.3 | 48.0 |
| Absolute value of value X (= A - B) | 21.8 | 11.5 | 4.5 | 20.1 |

[Table 6]

| | | | | Example 5 | Example 6 | Example 7 | Example 8 |
|---|---|---|---|---|---|---|---|
| Light modulating body | Visible light reflection color under no application of voltage (Observation or measurement from first resin layer side) | Reflection color | | Gray | Gray | Blue gray | Blue gray |
| | | Color coordinate L* | | 25.5 | 27.9 | 26.8 | 29.5 |
| | | Color coordinate a* | | -0.8 | 1.0 | 0.8 | 0.7 |
| | | Color coordinate b* | | -0.3 | -1.1 | -6.4 | -4.8 |
| | | Chromatic value C* | | 0.8 | 1.5 | 6. 4 | 4.9 |
| | Visible light reflection color under no application of voltage (Observation or measurement from second resin layer side) | Reflection color | | Deep blue | Brown | Gray | Gray |
| | | Color coordinate L* | | 26.8 | 27.3 | 25.9 | 25.4 |
| | | Color coordinate a* | | -0.1 | 0.7 | -0.2 | -0.5 |
| | | Color coordinate b* | | -2.0 | 0.3 | -1.0 | -0.8 |
| | | Chromatic value C* | | 2.0 | 0.8 | 1.0 | 0.9 |
| | Color difference between visible light reflection color of light modulating body when measured from first resin layer side under no application of voltage, and visible light reflection color of light modulating body when measured from second resin layer side under no application of voltage | | | 2.3 | 1.6 | 5.5 | 5.9 |
| | Visible light transmission color under application of voltage | Transmission color | | Gray | Gray | Gray | Gray |
| | | Visible light transmittance Tv | % | 26.2 | 10.3 | 6.0 | 8.6 |
| | | Color coordinate L* | | 57.4 | 38.0 | 29.5 | 35.3 |
| | | Color coordinate a* | | 2.8 | -1.3 | -4.0 | -1.3 |
| | | Color coordinate b* | | 6.8 | 7.3 | 0.6 | 2.6 |
| | | Chromatic value C* | | 7.4 | 7.4 | 4.0 | 2.9 |

[Table 7]

| | | Comparative Example 1 | Comparative Example 2 | Comparative Example 3 | Comparative Example 4 |
|---|---|---|---|---|---|
| Kind of first laminated glass member | | A | A | A | A |

(continued)

| | | | | Comparative Example 1 | Comparative Example 2 | Comparative Example 3 | Comparative Example 4 |
|---|---|---|---|---|---|---|---|
| First resin layer | Kind of resin composition | | | B | E | E | F |
| | Thickness | | mm | 0.76 | 0.76 | 0.76 | 0.38 |
| | Color | | | Gray | Transparent | Transparent | Brown |
| | Visible light dominant wavelength | | nm | 575 | - | - | 420 |
| | Visible light transmittance Tv | | % | 4.1 | 88.8 | 88.8 | 28.1 |
| | Visible light transmission color | Color coordinate L* | | 24.0 | 95.6 | 95.6 | 58.7 |
| | | Color coordinate a* ($a_1$) | | -1.0 | -1.7 | -1. 7 | 1.9 |
| | | Color coordinate b* ($b_1$) | | -0.4 | 1.3 | 1.3 | 13.2 |
| | | Chromatic value C* | | 1.1 | 2.2 | 2.2 | 13.4 |
| | Visible light reflection color | Color coordinate L* | | 25.1 | 34.1 | 34.1 | 26.9 |
| | | Color coordinate a* | | -0.1 | -0.8 | -0.8 | 0.0 |
| | | Color coordinate b* | | -0.6 | -0.1 | -0.1 | -0.1 |
| | | Chromatic value C* | | 0.6 | 0.8 | 0.8 | 0.1 |
| Light modulating layer | Kind | | | P | P | E | E |
| | Visible light transmission color under no application of voltage | Color coordinate L* | | 4.5 | 4.5 | 39.9 | 39.9 |
| | | Color coordinate a* | | 0.5 | 0.5 | -1.9 | -1.9 |
| | | Color coordinate b* | | 3.1 | 3.1 | -37.9 | -37.9 |
| | Visible light reflection color under no application of voltage | Color coordinate L* | | 47.0 | 47.0 | 25.7 | 25.7 |
| | | Color coordinate a* | | -2.0 | -2.0 | 0.6 | 0.6 |
| | | Color coordinate b* | | -2.8 | -2.8 | -3.4 | -3.4 |

(continued)

| | | | | Comparative Example 1 | Comparative Example 2 | Comparative Example 3 | Comparative Example 4 |
|---|---|---|---|---|---|---|---|
| Second resin layer | Kind of resin composition | | | B | E | E | F |
| | Thickness | | mm | 0.76 | 0.76 | 0.76 | 0.38 |
| | Color | | | Gray | Transparent | Transparent | Brown |
| | Visible light dominant wavelength | | nm | 575 | - | - | 420 |
| | Visible light transmittance Tv | | % | 4.1 | 88.8 | 88.8 | 28.1 |
| | Visible light transmission color | Color coordinate L* | | 24.0 | 95.6 | 95.6 | 58.7 |
| | | Color coordinate a* ($a_2$) | | -1.0 | -1.7 | -1. 7 | 1.9 |
| | | Color coordinate b* ($b_2$) | | -0.4 | 1.3 | 1.3 | 13.2 |
| | | Chromatic value C* | | 1.1 | 2.2 | 2.2 | 13.4 |
| | Visible light reflection color | Color coordinate L* | | 25.1 | 34.1 | 34.1 | 26.9 |
| | | Color coordinate a* | | -0.1 | -0.8 | -0.8 | 0.0 |
| | | Color coordinate b* | | -0.6 | -0.1 | -0.1 | -0.1 |
| | | Chromatic value C* | | 0.6 | 0.8 | 0.8 | 0.1 |
| Kind of second laminated glass member | | | | A | A | A | A |

[Table 8]

| | Comparative Example 1 | Comparative Example 2 | Comparative Example 3 | Comparative Example 4 |
|---|---|---|---|---|
| Ratio (peak height of visible light dominant wavelength of second resin layer/peak height of visible light dominant wavelength of first resin layer) | 1.00 | - | - | 1.00 |
| Color difference between visible light transmission color of first resin layer and visible light transmission color of second resin layer | 0.0 | 0.0 | 0.0 | 0.0 |
| Color difference between visible light reflection color of first resin layer and visible light reflection color of second resin layer | 0.0 | 0.0 | 0.0 | 0.0 |
| Sum of color coordinate a* of visible light transmission color of first resin layer and color coordinate a* of visible light transmission color of second resin layer | -1.9 | -3.5 | -3.5 | 3.7 |

(continued)

| | Comparative Example 1 | Comparative Example 2 | Comparative Example 3 | Comparative Example 4 |
|---|---|---|---|---|
| Absolute value of difference between color coordinate a* of visible light transmission color of first resin layer and color coordinate a* of visible light transmission color of second resin layer | 0.0 | 0.0 | 0.0 | 0.0 |
| Sum of color coordinate a* of visible light reflection color of first resin layer and color coordinate a* of visible light reflection color of second resin layer | -0.3 | -1.5 | -1.5 | 0.1 |
| Absolute value of difference between color coordinate a* of visible light reflection color of first resin layer and color coordinate a* of visible light reflection color of second resin layer | 0.0 | 0.0 | 0.0 | 0.0 |
| Sum of color coordinate b* of visible light transmission color of first resin layer and color coordinate b* of visible light transmission color of second resin layer | -0.8 | 2.6 | 2.6 | 26.5 |
| Absolute value of difference between color coordinate b* of visible light transmission color of first resin layer and color coordinate b* of visible light transmission color of second resin layer | 0.0 | 0.0 | 0.0 | 0.0 |
| Sum of color coordinate b* of visible light reflection color of first resin layer and color coordinate b* of visible light reflection color of second resin layer | -1.2 | -0.2 | -0.2 | -0.1 |
| Absolute value of difference between color coordinate b* of visible light reflection color of first resin layer and color coordinate b* of visible light reflection color of second resin layer | 0.0 | 0.0 | 0.0 | 0.0 |
| Value Y (= $[(a_1 + a_2)^2 + (b_1 + b_2)^2]^{1/2}$) | 2.10 | 4.36 | 4.36 | 26.71 |
| Color difference (A) between visible light transmission color of first resin layer and visible light transmission color of light modulating layer under no application of voltage | 19.9 | 91.2 | 68.1 | 54.6 |
| Color difference (B) between visible light transmission color of second resin layer and visible light transmission color of light modulating layer under no application of voltage | 19.9 | 91.2 | 68.1 | 54.6 |
| Absolute value of value X (= A - B) | 0.0 | 0.0 | 0.0 | 0.0 |

[Table 9]

| | | | | Comparative Example 1 | Comparative Example 2 | Comparative Example 3 | Comparative Example 4 |
|---|---|---|---|---|---|---|---|
| Light modulating body | Visible light reflection color under no application of voltage (Observation or measurement from first resin layer side) | Reflection color | | Gray | White | Deep blue | Gray |
| | | Color coordinate L* | | 25.3 | 41.1 | 26.8 | 27.9 |
| | | Color coordinate a* | | -0.2 | -1.8 | 0.3 | 0.0 |
| | | Color coordinate b* | | -0.7 | -1.9 | -3.5 | 0.6 |
| | | Chromatic value C* | | 0.7 | 2.7 | 3.6 | 0.6 |
| | Visible light reflection color under no application of voltage (Observation or measurement from second resin layer side) | Reflection color | | Gray | White | Deep blue | Gray |
| | | Color coordinate L* | | 25.4 | 41.6 | 26.8 | 27.8 |
| | | Color coordinate a* | | -0.2 | -1.8 | 0.3 | 0.0 |
| | | Color coordinate b* | | -0.6 | -2.0 | -3.5 | 0.6 |
| | | Chromatic value C* | | 0.7 | 2.7 | 3.6 | 0.6 |
| | Color difference between visible light reflection color of light modulating body when measured from first resin layer side under no application of voltage, and visible light reflection color of light modulating body when measured from second resin layer side under no application of voltage | | | 0.1 | 0.6 | 0.0 | 0.0 |
| | Visible light transmission color under application of voltage | Transmission color | | Gray | Transparent | Transparent | Gray |
| | | Visible light transmittance Tv | % | 0.2 | 88.1 | 88.1 | 23.1 |
| | | Color coordinate L* | | -1.2 | 95.2 | 95.2 | 53.8 |
| | | Color coordinate a* | | 1.0 | -2.3 | -2.3 | 2.1 |
| | | Color coordinate b* | | 1.2 | 2.9 | 2.9 | 14.9 |
| | | Chromatic value C* | | 1.5 | 3.7 | 3.7 | 15.1 |

## EXPLANATION OF SYMBOLS

1: First resin layer
2: Second resin layer
3: Light modulating layer
3a: First surface
3b: Second surface
11: Light modulating body
21: First laminated glass member
22: Second laminated glass member
31: Laminated glass

**Claims**

1. A light modulating body comprising a first resin layer, a light modulating layer, and a second resin layer in this order, the first resin layer and the second resin layer having different colors.

2. The light modulating body according to claim 1, wherein color difference in L*a*b* color system between visible light transmission color of the first resin layer and visible light transmission color of the second resin layer is more than 0 and less than 100.

3. The light modulating body according to claim 1 or 2, wherein an absolute value of value X determined from a formula (X) below is 5 or more and 100 or less:

$$\text{Value X} = A - B \cdots (X)$$

A: color difference in L*a*b* color system between visible light transmission color of the first resin layer and visible light transmission color of the light modulating layer under no application of voltage,
B: color difference in L*a*b* color system between visible light transmission color of the second resin layer and visible light transmission color of the light modulating layer under no application of voltage.

4. The light modulating body according to any one of claims 1 to 3,

wherein chromatic value C* in L*a*b* color system of visible light transmission color of the first resin layer is 50 or less,
chromatic value C* in L*a*b* color system of visible light transmission color of the second resin layer is 70 or less, and
visible light transmittance of the second resin layer is less than 100%.

5. The light modulating body according to any one of claims 1 to 4, wherein when a visible light spectrum in wavelengths of 380 nm to 780 nm of the first resin layer is obtained, a visible light dominant wavelength of the first resin layer exists at a wavelength of 580 nm or more and less than 780 nm.

6. The light modulating body according to any one of claims 1 to 5, wherein when a visible light spectrum in wavelengths of 380 nm to 780 nm of the second resin layer is obtained, a visible light dominant wavelength of the second resin layer exists at a wavelength of 380 nm or more and less than 650 nm.

7. The light modulating body according to any one of claims 1 to 6, wherein when a visible light spectrum in wavelengths of 380 nm to 780 nm of the first resin layer, and a visible light spectrum in wavelengths of 380 nm to 780 nm of the second resin layer are respectively obtained, a ratio of a peak height of the visible light dominant wavelength of the second resin layer to a peak height of the visible light dominant wavelength of the first resin layer is more than 0 and 5 or less.

8. The light modulating body according to any one of claims 1 to 7, wherein

the first resin layer contains a thermoplastic resin and a coloring agent, and
the second resin layer contains a thermoplastic resin and a coloring agent.

9. The light modulating body according to any one of claims 1 to 8, wherein

an average thickness of the first resin layer is 50 μm or more and 1000 μm or less, and
an average thickness of the second resin layer is 50 μm or more and 1000 μm or less.

10. The light modulating body according to any one of claims 1 to 9, wherein color coordinate a* in L*a*b* color system of visible light reflection color of the light modulating body when measured from the first resin layer side under no application of voltage is -20 or more and 20 or less.

11. The light modulating body according to any one of claims 1 to 10, wherein color coordinate a* in L*a*b* color system of visible light reflection color of the light modulating body when measured from the second resin layer side under no application of voltage is -20 or more and 20 or less.

12. The light modulating body according to any one of claims 1 to 11, wherein color coordinate a* in L*a*b* color system of visible light transmission color of the light modulating body under application of voltage is - 20 or more and 20 or less.

13. The light modulating body according to any one of claims 1 to 12, wherein the first resin layer and the second resin layer are a combination having a relation of complementary colors.

14. The light modulating body according to any one of claims 1 to 13, wherein a product of color coordinate a* in L*a*b* color system of visible light transmission color of the first resin layer, and color coordinate a* in L*a*b* color system of visible light transmission color of the second resin layer is a negative value.

15. The light modulating body according to any one of claims 1 to 14, wherein a sum of color coordinate a* in L*a*b* color system of visible light transmission color of the first resin layer, and color coordinate a* in L*a*b* color system of visible light transmission color of the second resin layer is 15 or less.

16. The light modulating body according to any one of claims 1 to 15, wherein a product of color coordinate b* in L*a*b* color system of visible light transmission color of the first resin layer, and color coordinate b* in L*a*b* color system of visible light transmission color of the second resin layer is a negative value.

17. The light modulating body according to any one of claims 1 to 16, wherein a sum of color coordinate b* in L*a*b* color system of visible light transmission color of the first resin layer, and color coordinate b* in L*a*b* color system of visible light transmission color of the second resin layer is 15 or less.

18. The light modulating body according to any one of claims 1 to 17, wherein a product of color coordinate a* in L*a*b* color system of visible light reflection color of the first resin layer, and color coordinate a* in L*a*b* color system of visible light reflection color of the second resin layer is a negative value.

19. The light modulating body according to any one of claims 1 to 18, wherein a sum of color coordinate a* in L*a*b* color system of visible light reflection color of the first resin layer, and color coordinate a* in L*a*b* color system of visible light reflection color of the second resin layer is 10 or less.

20. The light modulating body according to any one of claims 1 to 19, wherein a sum of color coordinate b* in L*a*b* color system of visible light reflection color of the first resin layer, and color coordinate b* in L*a*b* color system of visible light reflection color of the second resin layer is 10 or less.

21. A laminated glass comprising:

a first laminated glass member;
a second laminated glass member; and
the light modulating body according to any one of claims 1 to 20,
the light modulating body being arranged between the first laminated glass member and the second laminated glass member.

22. The laminated glass according to claim 21, wherein color coordinate a* in L*a*b* color system of visible light reflection color of the laminated glass when measured from the first laminated glass member side under no application of voltage is -20 or more and 20 or less.

**23.** The laminated glass according to claim 21 or 22, wherein color coordinate a* in L*a*b* color system of visible light reflection color of the laminated glass when measured from the second laminated glass member side under no application of voltage is -20 or more and 20 or less.

**24.** The laminated glass according to any one of claims 21 to 23, wherein color coordinate a* in L*a*b* color system of visible light transmission color of the laminated glass under application of voltage is -20 or more and 20 or less.

**25.** An automobile comprising:

an automobile body; and
laminated glass serving as window glass of the automobile,
the laminated glass being the laminated glass according to any one of claims 21 to 24.

[FIG. 1.]

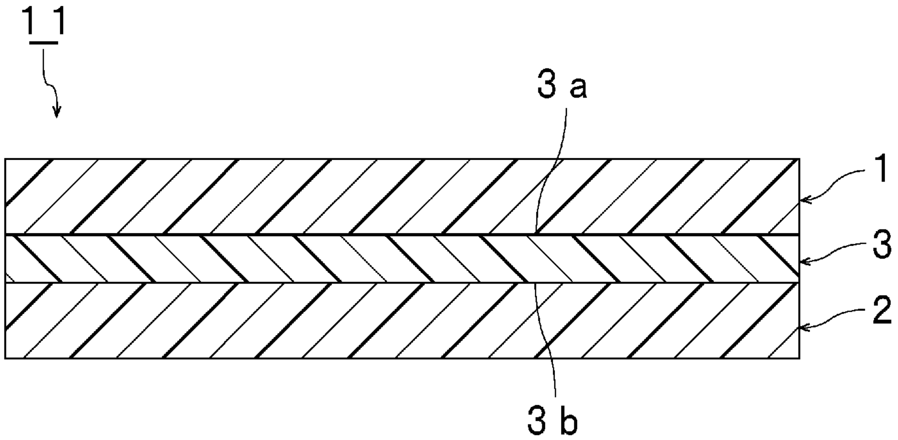


[FIG. 2.]

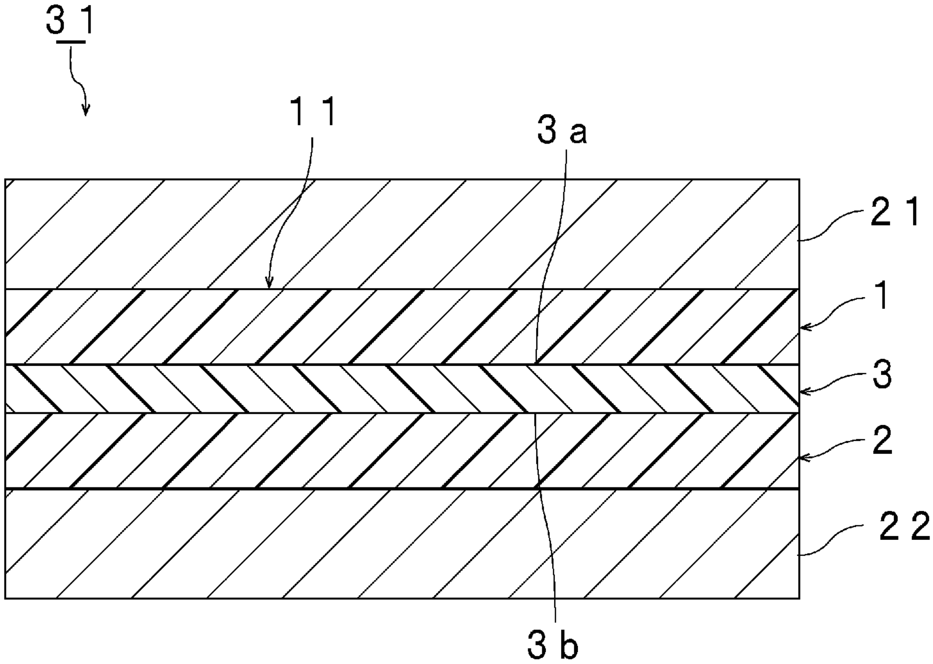

## INTERNATIONAL SEARCH REPORT

International application No.
**PCT/JP2023/035428**

**A. CLASSIFICATION OF SUBJECT MATTER**

***C03C 27/12***(2006.01)i; ***G02F 1/13***(2006.01)i
FI: C03C27/12 N; G02F1/13 505

According to International Patent Classification (IPC) or to both national classification and IPC

**B. FIELDS SEARCHED**

Minimum documentation searched (classification system followed by classification symbols)

C03C27/12; B32B1/00-43/00; B60J1/00; G02F1/00-7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/153998 A1 (AGC INCORPORATED) 21 July 2022 (2022-07-21) paragraphs [0002], [0012]-[0021], [0049]-[0051], [0082], fig. 1B | 1-25 |
| X | WO 2019/166209 A1 (SAINT-GOBAIN GLASS FRANCE) 06 September 2019 (2019-09-06) page 6, lines 16-20, page 26, lines 7-24, page 31, line 22 to page 32, line 29, fig. 15-16 | 1-25 |
| X<br>A | WO 2004/035665 A1 (BRIDGESTONE CORPORATION) 29 April 2004 (2004-04-29) page 12, line 28 to page 19, line 2, fig. 9e | 1-20<br>21-25 |
| A | JP 6-199546 A (SEKISUI CHEM. COMPANY, LIMITED) 19 July 1994 (1994-07-19) entire text | 1-25 |
| A | WO 2012/043797 A1 (SEKISUI CHEM. COMPANY, LIMITED) 05 April 2012 (2012-04-05) entire text | 1-25 |
| A | JP 2021-535882 A (GIESECKE+DEVRIENT CURRENCY TECHNOLOGY GESELLSCHAFT MIT BESCHRANKTER HAFTUNG) 23 December 2021 (2021-12-23) entire text | 1-25 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2023** | **19 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/035428**

| Patent document cited in search report | Publication date (day/month/year) | Patent family member(s) | Publication date (day/month/year) |
|---|---|---|---|
| WO 2022/153998 A1 | 21 July 2022 | (Family: none) | |
| WO 2019/166209 A1 | 06 September 2019 | CN 110418714 A | |
| WO 2004/035665 A1 | 29 April 2004 | (Family: none) | |
| JP 6-199546 A | 19 July 1994 | (Family: none) | |
| WO 2012/043797 A1 | 05 April 2012 | (Family: none) | |
| JP 2021-535882 A | 23 December 2021 | US 2021/0339504 A1<br>entire text<br>EP 3847015 A1<br>CN 112601660 A<br>WO 2020/048638 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013254079 A